(19) Europäisches Patentamt
European Patent Office
Office européen des brevets

(11) **EP 4 411 129 A1**

(12) **EUROPEAN PATENT APPLICATION**
published in accordance with Art. 153(4) EPC

(43) Date of publication:
**07.08.2024 Bulletin 2024/32**

(21) Application number: **22875955.1**

(22) Date of filing: **21.09.2022**

(51) International Patent Classification (IPC):
**F02M 25/08** (2006.01)    **B01J 20/20** (2006.01)
**C01B 32/354** (2017.01)

(52) Cooperative Patent Classification (CPC):
**B01J 20/20; C01B 32/354; F02M 25/08**

(86) International application number:
**PCT/JP2022/035091**

(87) International publication number:
**WO 2023/054088 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2021 JP 2021158752
23.08.2022 JP 2022132289**

(71) Applicant: **Nippon Paper Industries Co., Ltd.
Tokyo 114-0002 (JP)**

(72) Inventors:
• **WATANABE, Yoshihide**
  **Tokyo 114-0002 (JP)**
• **IMAI, Daisuke**
  **Tokyo 114-0002 (JP)**
• **TAKATA, Yu**
  **Tokyo 114-0002 (JP)**
• **RYU, Dongyeon**
  **Tokyo 114-0002 (JP)**

(74) Representative: **Hoffmann Eitle
Patent- und Rechtsanwälte PartmbB
Arabellastraße 30
81925 München (DE)**

(54) **MOLDED ADSORBENT FOR CANISTERS**

(57)    One of problems to be solved is to provide an adsorbing material suitable for canisters and enabling reduction in pressure loss. Another one of the problems to be solved is to provide, using activated carbon fiber, a formed adsorber that is a formed product difficult to be deformed, the formed adsorber serving as an adsorbing material for canisters, the adsorbing material having excellent effects.

The formed adsorber for canisters satisfies at least the following conditions (A), (B), and (C).
(A) The formed adsorber is a formed product including activated carbon fiber, granular activated carbon, and a binder.
(B) A weight ratio of the activated carbon fiber to the granular activated carbon in a total weight of the activated carbon fiber and the granular activated carbon is 5 to 95 parts by weight of the activated carbon fiber to 95 to 5 parts by weight of the granular activated carbon.
(C) A weight ratio of the binder in the formed adsorber is 0.3 to 20 parts by weight to 100 parts by weight of the activated carbon fiber and the granular activated carbon that are contained in the formed adsorber.

[Fig. 1]

## Description

### Technical Field

The present disclosure relates to formed adsorbers for canisters, and particularly relates to formed adsorbers for canisters, the formed adsorbers using activated carbon.

### Background Art

Pressure in fuel tanks of vehicles changes as outside air temperature changes, for example, and fuel vapor that has filled the fuel tanks is released from the fuel tanks. These vehicles include motor vehicles, motorbikes (motorcycles), and boats, and have internal-combustion engines for combustion of fuel vapor, such as gasoline. The released fuel vapor is considered to be one of substances contributing to PM2.5 and photochemical smog. Canisters (also called fuel vapor restraining devices) including adsorbing materials, such as activated carbon, have been provided to prevent the release of the fuel vapor into the atmosphere.

With the recent increase in awareness for environmental conservation, various gas emission regulations tend to be tightened year by year and there is thus a demand for canisters to have higher adsorption performance. Furthermore, intake performance of motor vehicles tends to be reduced due to the spread of start-stop systems, for example, and gasoline adsorbed by adsorbing materials in their canisters thus tends to be difficult to be desorbed. Therefore, there is a demand for adsorbing materials used in canisters to have even higher performance. Activated carbon is often used as an adsorbing material to be used in canisters and granular activated carbon and activated carbon that has been molded into a pellet or honeycomb shape have been proposed, for example (for example, Patent Literature 1.)

Furthermore, in recent years, for improving the performance of canisters, more canisters have an adsorbing material stored in more than one chamber by each being provided with a main chamber and an auxiliary chamber, for example (Patent Literature 2, for example).

Activated carbon fiber (or fibrous activated carbon) is sometimes referred to as the third activated carbon in contrast with conventional powdered or granular activated carbon. Among activated carbon in a broad sense, activated carbon fiber is said to have: micropores that are directly open at the outer surface of the activated carbon fiber; and a tendency to be high in adsorption and desorption speed. However, activated carbon fiber has not been put to practical use in canisters, and research and development have not advanced sufficiently yet as to characteristics of activated carbon fiber suitable for practical use in canisters.

An activated carbon fiber sheet having given characteristics has been proposed as one of adsorbing materials suitable for canisters (Patent Literature 3).

Furthermore, a formed activated carbon fiber adsorber including activated carbon fiber and fibrillated cellulose fiber having resistance to alkali has been proposed for improvement of mechanical strength and filling density of formed adsorbers using activated carbon fiber (for example, Patent Literature 4).

### Citation List

### Patent Literature

Patent Literature 1: Japanese Patent Application Laid-open No. 2013-173137
Patent Literature 2: Japanese Patent Application Laid-open No. 2019-010880
Patent Literature 3: Japanese Patent No. 6568328
Patent Literature 4: Japanese Patent Application Laid-open No. H10-005580

### Summary of Invention

### Technical Problem

As described above, using activated carbon fiber as an adsorbing material for canisters has been attempted, but activated carbon fiber to be used as an adsorbing material for canisters still has room for development. Furthermore, there is still room for development on what kinds of adsorbing materials should be used when plural storage chambers, such as a main chamber and an auxiliary chamber, are to be filled with an adsorbing material or adsorbing materials.

Aiming to enable activated carbon fiber to be used practically as an adsorber in motor vehicle canisters, the inventors conducted diligent research and found that: the adsorbing material needs to be immobilized so that the adsorbing material is not worn away by, for example, vibration caused when the motor vehicles are driven; and a sheet formed of activated carbon fiber is a practically suitable embodiment in terms of ease of use, for example. However, the inventors faced a new problem that fully filling a chamber for storing an adsorbing material with an activated carbon fiber sheet obtained by carbonization and activation as conventionally done increases the pressure loss in the canister.

In view of the foregoing, one of problems to be solved is to provide an adsorbing material using activated carbon fiber, suitable for canisters, and enabling reduction of pressure loss.

Furthermore, another one of the problems to be solved is to provide, using activated carbon fiber, a formed adsorber that is a formed product difficult to be deformed, the formed adsorber achieving excellent effects for serving as an adsorbing material suitable for canisters.

**Solution to Problem**

The present inventors conducted diligent research to solve the above described problems and, in one aspect, conducted studies on formed products of activated carbon fiber. By using activated carbon fiber and a binder, the present inventors then succeeded in manufacturing a formed product having properties demanded for use in canisters. Furthermore, the present inventors have found out that forming by mixture of different forms of activated carbon, activated carbon fiber and granular activated carbon, achieves even lower pressure loss than that in a formed product using a binder and either activated carbon fiber or granular activated carbon.

The invention presented by the present disclosure can be understood versatilely through various aspects and, for example, may include embodied aspects as solutions to the problems, as follows. (The invention presented by the present disclosure may also be referred to as the "present invention."

[1] A formed adsorber for a canister, the formed adsorber comprising:

activated carbon fiber, granular activated carbon, and a binder, the formed adsorber being a formed product, a weight ratio of 5 to 95 parts by weight of the activated carbon fiber to 95 to 5 parts by weight of the granular activated carbon, in a total weight of the activated carbon fiber and the granular activated carbon; and a weight ratio of 0.3 to 20 parts by weight of the binder in the formed adsorber to 100 parts by weight of the activated carbon fiber and the granular activated carbon that are contained in the formed adsorber.

[2] The formed adsorber according to [1] above, wherein pressure loss in the formed adsorber is less than pressure loss in a formed adsorber of a two-type mixture of the activated carbon fiber and the binder and less than pressure loss in a formed product of a two-type mixture of the granular activated carbon and the binder.

[3] The formed adsorber for a canister, according to [2] above, wherein the pressure loss in the formed adsorber is 0.52 kPa or less.

[4] The formed adsorber for a canister, according to [2] above, wherein the pressure loss in the formed adsorber is 0.45 kPa or less.

[5] The formed adsorber according to any one of [1] to [4] above, wherein the granular activated carbon has a mean particle size ranging from 100 to 3000 $\mu$m.

[6] The formed adsorber according to any one of [1] to [5] above, wherein the activated carbon fiber has a mean fiber length ranging from 300 to 10000 $\mu$m.

[7] The formed adsorber according to any one of [1] to [6] above, wherein the formed adsorber has a dry density ranging from 0.010 to 0.400 g/cm$^3$.

[8] The formed adsorber according to [1] to [7] above, wherein the formed adsorber has a specific surface area of 2500 m$^2$/g or less.

[9] The formed adsorber according to any one of [1] to [8] above, wherein the formed adsorber has a total pore volume ranging from 0.50 to 1.20 cm$^3$.

[10] The formed adsorber according to [1] to [9] above, wherein the binder is a fibrous binder.

[11] The formed adsorber according to [1] above, wherein the granular activated carbon has a mean particle size ranging from 100 to 3000 um,

the activated carbon fiber has a mean fiber length ranging from 300 to 10000 um,
the formed adsorber has a dry density ranging from 0.010 to 0.400 g/cm$^3$,
the formed adsorber has a specific surface area of 2500 m$^2$/g or less,
the formed adsorber has a total pore volume ranging from 0.50 to 1.20 cm$^3$, and
the binder is a fibrous binder.

[12] The formed adsorber according to [3] above, wherein the granular activated carbon has a mean particle size ranging from 100 to 3000 um,

the activated carbon fiber has a mean fiber length ranging from 300 to 10000 $\mu$m,
the formed adsorber has a dry density ranging from 0.010 to 0.400 g/cm$^3$,
the formed adsorber has a specific surface area of 2500 m$^2$/g or less,
the formed adsorber has a total pore volume ranging from 0.50 to 1.20 cm$^3$, and
the binder is a fibrous binder.

[13] A canister comprising the formed adsorber according to any one of [1] to [12] above.

**Advantageous Effects of Invention**

According to one or more aspects of the present invention, an adsorbing material is able to be provided, the adsorbing material using activated carbon fiber, being suitable for canisters, and enabling reduction in pressure loss.

Furthermore, according to one or more aspects of the present invention, a formed adsorber is able to be provided, the formed adsorber being a formed product using activated carbon fiber, the formed product being difficult to be deformed, the formed adsorber achieving excellent effects for serving as an adsorbing material suitable for canisters.

**Brief Description of Drawings**

FIG. 1 is a diagram schematically illustrating an example of a layered adsorber having plural sheet-shaped formed adsorbers layered over one another and an example of a flow direction of fluid that passes through the layered adsorber.
FIG. 2 is a diagram illustrating an example of an adsorber that has been formed in a disk shape.
FIG. 3 is a diagram illustrating an example of an adsorber that has been formed in a cylinder shape.

**Description of Embodiments**

The present disclosure is made through an international application under the Patent Cooperation Treaty and is made in Japanese language at the time of application. The present disclosure is planned to be translated, upon entry to designated states and elected states, into languages required by these states. In the present disclosure, unless stated otherwise, nouns in Japanese language may be singular or plural in accordance with the full text or the context of the present disclosure. Furthermore, upon translation into a language, such as English language, where there are countable nouns and uncountable nouns and countable nouns each have a singular form and a plural form that are distinguished from each other, the singular form includes a plural case and the plural form includes a singular case, in accordance with the full text or the context of the present disclosure, unless stated otherwise.

Embodiments of the present invention will be described hereinafter. Specific description is provided for the following embodiments to facilitate understanding of the present invention, but the present invention is not to be limited by the following embodiments, and components and combinations thereof may be modified as appropriate without departing from the gist of the present invention. Furthermore, the following embodiments of the present invention may be described while reference is made to the drawings. Shapes, sizes, and layouts of the components are schematically illustrated in the drawings to facilitate understanding of the present invention and may be modified as appropriate without departing from the gist of the present invention. The same reference sign will be assigned to components that are the same throughout the drawings and redundant description thereof may be omitted.

In the present disclosure, the phrase, "ranging from AA to BB," related a numerical range means "being in the range of AA or more and BB or less," (where "AA" and "BB" are any numerical values) unless specified otherwise. Furthermore, the units of the lower limit and the upper limit are both the same as the unit written immediately after the upper limit (that is, "BB" herein), unless specified otherwise. Furthermore, as a combination of a lower limit value and an upper limit value of a numerical range in the present disclosure, any combination of numerical values can be selected from a group of lower limit values and a group of upper limit values described as examples of preferred numerical values. Furthermore, the expression, "X and/or Y," means both X and Y, or either X or Y.

Furthermore, in the description related to the present invention, the term "pore size" means the diameter or width of a pore, rather than the radius of the pore, unless otherwise specified clearly.

1. Formed Adsorber for Canister

In an embodiment of the present invention, a formed adsorber can be suitably used in a canister. A canister is a piece of equipment that includes an adsorbing material and has a role in reducing vaporized fuel vapor released into the atmosphere by letting the vaporized fuel vapor be adsorbed by the adsorbing material, and supplying fuel vapor to an engine by letting the fuel vapor adsorbed by the adsorbing material be desorbed when the engine is operating. Canisters are generally used in machines or equipment including internal-combustion engines that use fuels including highly volatile hydrocarbons, for example, in vehicles and vessels that include internal-combustion engines. Examples of these vehicles include motor vehicles that use gasoline as a fuel. Examples of these vessels include boats that use gasoline as a fuel.

In an embodiment of the present invention, the formed adsorber includes activated carbon fiber, granular activated carbon, and a binder. In a preferred embodiment, the formed adsorber may be a formed item of a mixture of the activated carbon fiber, the granular activated carbon, and the binder. Furthermore, another preferred embodiment of the formed adsorber may be a layered structure having plural sheets bound together by use of the binder, the plural sheets being activated carbon fiber sheets having the granular activated carbon adhered to or held on surfaces thereof.

In an embodiment of the present invention, in a total weight of the activated carbon fiber and the granular activated carbon, a weight ratio of the activated carbon fiber to the granular activated carbon is 5 to 95 parts by weight of the activated carbon fiber to 95 to 5 parts by weight of the granular activated carbon. In other words, in 100 parts by weight of the activated carbon fiber and the granular activated carbon that are contained in the formed adsorber, preferably 5 parts by weight or more and 95 parts by weight or less of the activated carbon fiber may be included, and preferably 5 parts by weight or more and 95 parts by weight of the granular activated carbon may be included. The following is an example having specific numerical values specified therein. In an embodiment that may be adopted, if the formed adsorber contains, in total, 10 g of the activated carbon fiber and granular activated carbon, for example, the formed adsorber includes 5 g (50 parts by weight) of the activated carbon fiber and 5 g (50 parts by weight) of the granular activated carbon.

A weight ratio of the activated carbon fiber to the granular activated carbon (activated carbon fiber:granular activated carbon) may be preferably 95 to 5 parts by weight to 5 to 95 parts by weight, in terms of reducing pressure loss, for example, although this weight ratio depends on the performance demanded for the formed adsorber.

Preferred contents of the activated carbon fiber and granular activated carbon in terms of reducing pressure loss will be individually described as follows.

The upper limit of the content of the activated carbon fiber in the formed adsorber may be preferably 95 parts by weight or less, more preferably 75 or 65 parts by weight or less, and even more preferably 55 or 45 parts by weight or less, in 100 parts by weight of the activated carbon fiber and granular activated carbon in total. Furthermore, the lower limit of the content of the activated carbon fiber in the formed adsorber may be preferably 5 or 8 parts by weight or more in 100 parts by weight of the activated carbon fiber and granular activated carbon in total.

The upper limit of the content of the granular activated carbon in the formed adsorber may be preferably 95 or 92 parts by weight or less in 100 parts by weight of the activated carbon fiber and granular activated carbon in total. Furthermore, the lower limit of the content of the granular activated carbon in the formed adsorber may be preferably 5 parts by weight or more, more preferably 25 or 35 parts by weight or more, and even more preferably 45 or 55 parts by weight or more, in 100 parts by weight of the activated carbon fiber and granular activated carbon in total.

As described above, in an embodiment of the present invention, the activated carbon fiber and the granular activated carbon are each used as a component of the formed adsorber. Various embodiments of the activated carbon fiber and the granular activated carbon will be described in detail later.

In an embodiment of the present invention, the binder is used as a component of the formed adsorber. The binder that may be used is preferably a binder that does not easily block pores of the activated carbon fiber and activated carbon and examples of a material for the binder may include polyvinyl alcohol. Furthermore, preferred examples of the binder may include fibrous binders. The fibrous binders are not particularly limited as long as the activated carbon fiber and the granular activated carbon can be entangled and shaped by fibrillation. A wide range of binders including synthetic binders and naturally occurring binders are able to be used. Examples of such a fibrous binder may include acrylic fiber, polyethylene fiber, polypropylene fiber, polyacrylonitrile fiber, cellulose fiber, nylon fiber, and aramid fiber.

In an embodiment of the present invention, the ratio of the binder contained in the formed adsorber may be 0.3 to 20 parts by weight to 100 parts by weight of the activated carbon fiber and granular activated carbon contained in the formed adsorber. More specifically, the ratio of the binder contained in the formed adsorber is as follows.

The lower limit value of the ratio of the binder contained may be preferably 0.3, 0.5, 0.8, 1.0, 2.0, or 3.0 parts by weight.

The upper limit value of the ratio of the binder contained may be preferably 20, 18, 15, or 10 parts by weight.

The following is an example having specific numerical values specified therein. For example, if the formed adsorber contains, in total, 10 g of the activated carbon fiber and granular activated carbon, 0.03 g to 2 g of the binder may be added therein. Therefore, in this case, the total weight of the activated carbon fiber, granular activated carbon, and binder in the formed product is 10.03 g to 10.2 g.

Adding the binder at the above mentioned content ratio enables preparation of the formed adsorber having both mechanical strength and adsorption and desorption performance. If higher mechanical strength is desired, the amount of the binder may be increased and if adsorption and desorption performance is considered to be important, the amount of the binder may be set small. Furthermore, having such a content may also be suitable for obtaining a formed adsorber achieving less pressure loss.

The activated carbon fiber may be preferably mixed as fiber in a defibrated state. Mixing the activated carbon fiber as fiber in the defibrated state, with components, such as the granular activated carbon and the binder, enables the components to be entangled with one another adequately and bound together well, the mechanical strength of the formed product to be improved, and the formed product to be difficult to be deformed.

Another embodiment of the present invention may be as follows, for example.

A formed adsorber for a canister, the formed adsorber being a formed product including activated carbon fiber, granular activated carbon, and a binder, pressure loss in the formed adsorber being smaller than pressure loss in a formed product of a two-type mixture of the activated carbon fiber and the binder and smaller than pressure loss in a formed product of a two-type mixture of the granular activated carbon and the binder.

The formed adsorber according to the present disclosure enables the pressure loss therein to be low. The activated carbon fiber itself is a material that is comparatively low in pressure loss among some types of activated carbon available. However, using only activated carbon fiber tends to result in deformation. Therefore, the present inventors devised mixing granular activated carbon and a binder with activated carbon fiber and subjecting the mixture to forming, to improve the shape stability. At first, the present inventors had predicted that though improving the shape stability, this forming might either: make the pressure loss become, at the very best, the mean of the pressure loss in a formed product made of the activated carbon fiber and the binder and the pressure loss in that made of the granular activated carbon and the binder; or increase the pressure loss. However, the formed product of this three-type mixture that was able to be obtained was an unexpected formed adsorber achieving pressure loss smaller than both the pressure loss in the formed product of the two-type mixture of the activated carbon fiber and the binder and the pressure loss in the formed product of the two-type mixture of the granular activated carbon and the binder.

The mechanism of this effect is not necessarily clear, but one presumption is that although activated carbon fiber and granular activated carbon are both activated carbon, they are materials having physical characteristics, such as shapes, that are different from each other, and voids may thus be generated in some states of mixture of these different types of materials and may contribute to decrease in the pressure loss.

In an embodiment of the present invention, the pressure loss may preferably range from 0. 05 to 0.52 kPa. More specifically, the pressure loss is as follows.

In an embodiment of the present invention, the upper limit of the pressure loss in the formed adsorber may be preferably 0.52, 0.50, 0.45, or 0.43 kPa or less, more preferably 0.40, 0.38, 0.35, or 0.33 kPa or less, and even more preferably 0.30, 0.28, or 0.25 kPa or less.

This does not mean that the lower the pressure loss the better, and in terms of the adsorption performance for the intended purpose, the lower limit of the pressure loss may be preferably 0.05 kPa, 0.08, or 0.10 kPa or more.

More preferable formed adsorbers for canisters may be provided as further various embodiments of the present invention, by further fulfilment of one or any two or more of the following given conditions. Any preferred combination of the following given conditions may be selected as desired according to requirements demanded.

Specific Surface Area of Formed Adsorber

In an embodiment of the present invention, the formed adsorber preferably has a specific surface area of 100 to 2500 $m^2/g$ or less. More specifically, the specific surface area is as follows.

In an embodiment of the present invention, the lower limit of the specific surface area of the formed adsorber may be preferably 100 $m^2/g$ or more, more preferably 200 $m^2/g$ or more, and even more preferably 300, 500, 700, 900, 1000, 1100, or 1200 $m^2/g$ or more.

In an embodiment of the present invention, the specific surface area of the activated carbon is preferably large in general in terms of adsorption and desorption performance, but the upper limit of the specific surface area of the activated carbon may be about 2500, 2400, 2300, 2200, or 2100 $m^2/g$ or less.

Setting the specific surface area in the above range enables the formed adsorber to have more excellent adsorption and desorption performance for fuel vapor. Furthermore, in an embodiment of the present invention, a comparatively large specific surface area may be maintained for the above described adsorbing material used in a canister and reduction of pressure loss in the canister may be achieved.

Total Pore Volume of Formed Adsorber

In an embodiment of the present invention, the formed adsorber may preferably have a total pore volume of 0.50 to 1.20 cm$^3$/g or less. More specifically, the total pore volume is as follows.

In an embodiment of the present invention, the lower limit of the total pore volume of the formed adsorber may be preferably 0.50 cm$^3$/g or more, more preferably 0.55 cm$^3$/g or more, and even more preferably 0.60, 0.65, 0.70, or 0.75 cm$^3$/g or more.

In an embodiment of the present invention, the upper limit of the total pore volume of the formed adsorber may be preferably 1.20 cm$^3$/g or less, more preferably 1.15 cm$^3$/g or less, and even more preferably 1.10, 1.05, 1.03, or 1.00 cm$^3$/g or less.

Setting the total pore volume in the above range is suitable for obtaining a formed adsorber excellent in terms of adsorption and desorption performance and pressure loss, for example.

Mean Pore Size (Mean Pore Diameter) of Formed Adsorber

In an embodiment of the present invention, the formed adsorber may preferably have a mean pore size ranging from 1.50 to 2.50 nm. More specifically, the mean pore size is as follows.

In an embodiment of the present invention, the lower limit of the mean pore size of the formed adsorber is preferably 1.50 nm or more, more preferably 1.60 nm or more, and even more preferably 1.70 nm or more.

In an embodiment of the present invention, the upper limit of the mean pore size of the formed adsorber may be optional, but may be preferably 2.50 nm or less, more preferably 2.20 nm or less, and even more preferably 2.00 or 1.90 nm or less.

Setting the mean pore size in the above range is suitable for obtaining a formed adsorber excellent in terms of adsorption and desorption performance and pressure loss, for example.

Ultramicropore Volume of Formed Adsorber: $V_{0.7}$

In the present disclosure, the term, "ultramicropore," means a pore having a pore size of 0.7 nm or less.

In an embodiment of the present invention, the formed adsorber may preferably have an ultramicropore volume ranging from 0.05 to 0.30 cm$^3$/g. More specifically, the ultramicropore volume is as follows.

In an embodiment of the present invention, the lower limit of the ultramicropore volume of the formed adsorber may be preferably 0.05 cm$^3$/g or more, more preferably 0.10 cm$^3$/g or more, and even more preferably 0.12 or 0.14 cm$^3$/g or more.

In an embodiment of the present invention, the upper limit of the ultramicropore volume of the formed adsorber may be preferably 0.30 cm$^3$/g or less, more preferably 0.29 cm$^3$/g or less, and even more preferably 0.26, 0.24, 0.22, or 0.20 cm$^3$/g or less.

Setting the ultramicropore volume in the above range is suitable for obtaining a formed adsorber excellent in terms of adsorption and desorption performance and pressure loss, for example.

Micropore Volume of Formed Adsorber: $V_{2.0}$

In the present disclosure, the term, "micropore," means a pore having a pore size of 2.0 nm or less.

In an embodiment of the present invention, the formed adsorber may preferably have a micropore volume ranging from 0.50 to 1.00 cm$^3$/g. More specifically, the micropore volume is as follows.

In an embodiment of the present invention, the lower limit of the micropore volume of the formed adsorber may be preferably 0.50 cm$^3$/g or more, more preferably 0.55 or 0.58 cm$^3$/g or more, and even more preferably 0.59 or 0.60 cm$^3$/g or more.

In an embodiment of the present invention, the upper limit of the micropore volume of the formed adsorber may be preferably 1.00 cm$^3$/g or less, more preferably 0.90 cm$^3$/g or less, and even more preferably 0.80 cm$^3$/g or less.

Setting the micropore volume in the above range is suitable for obtaining a formed adsorber excellent in terms of adsorption and desorption performance and pressure loss, for example.

Pore Volume of Pores Having Pore Sizes Larger than 0.7 nm and Equal to or Smaller than 2.0 nm: $V_{0.7-2.0}$

A pore volume $V_{0.7-2.0}$ of pores having pore sizes larger than 0.7 nm and equal to or smaller than 2.0 nm can be determined by Equation 1 below using a value "a" of ultramicropore volume and a value "b" of micropore volume.

$$V_{0.7\text{-}2.0} = b - a \qquad\qquad (\text{Equation } 1)$$

In an embodiment of the present invention, a pore volume $V_{0.7\text{-}2.0}$ of pores having pore sizes larger than 0.7 nm and equal to or smaller than 2.0 nm in the formed adsorber may preferably range from 0.30 to 1.00 cm$^3$/g. More specifically, the pore volume $V_{0.7\text{-}2.0}$ is as follows.

In an embodiment of the present invention, the lower limit of the pore volume $V_{0.7\text{-}2.0}$ of the pores having pore sizes larger than 0.7 nm and equal to or smaller than 2.0 nm in the formed adsorber may be preferably 0.30 cm$^3$/g or more, more preferably 0.36 cm$^3$/g or more, and even more preferably 0.38, 0.40, or 0.43 cm$^3$/g or more.

In an embodiment of the present invention, the upper limit of the pore volume $V_{0.7\text{-}2.0}$ of the pores having pore sizes larger than 0.7 nm and equal to or smaller than 2.0 nm may be preferably 1.00 cm$^3$/g or less, more preferably 0.90 cm$^3$/g or less, and even more preferably 0.80, 0.75, 0.70, 0.65, or 0.60 cm$^3$/g or less.

Setting the pore volume $V_{0.7\text{-}2.0}$ in the above range is suitable for obtaining a formed adsorber excellent in terms of adsorption and desorption performance and pressure loss, for example.

Ratio of Volume of Ultramicropores to Volume of Micropores: $R_{0.7/2.0}$

A ratio $R_{0.7/2.0}$ of the pore volume of ultramicropores having pore sizes of 0.7 nm or less to the pore volume of micropores having pore sizes of 2.0 nm or less can be determined by Equation 2 below using the value "a" of the ultramicropore volume and the value "b" of the micropore volume.

$$R_{0.7/2.0} = a/b \times 100 \ (\%) \qquad\qquad (\text{Equation } 2)$$

In an embodiment of the present invention, the ratio $R_{0.7/2.0}$ of the ultramicropore volume to the micropore volume in the formed adsorber may preferably range from 15.0 to 60.0%. More specifically, the ratio $R_{0.7/2.0}$ is as follows.

In an embodiment of the present invention, the lower limit of the ratio $R_{0.7/2.0}$ of the ultramicropore volume to the micropore volume in the formed adsorber may be preferably 15.0% or more, more preferably 18% or more, and even more preferably 19% or more.

In an embodiment of the present invention, the upper limit of the ratio $R_{0.7/2.0}$ of the ultramicropore volume to the micropore volume in the formed adsorber may be preferably 60.0% or less, more preferably 50% or less, and even more preferably 40, 30, or 25% or less.

Setting the ratio $R_{0.7/2.0}$ of the ultramicropore volume in the above range is suitable for obtaining a formed adsorber excellent in terms of adsorption and desorption performance and pressure loss, for example.

Dry Density of Formed Adsorber

In an embodiment of the present invention, the formed adsorber may preferably have a dry density ranging from 0.010 to 0.400 g/cm$^3$. More specifically, the dry density is as follows.

The formed adsorber that is an embodiment of the present invention may preferably have the following upper limit and lower limit for the dry density of the formed adsorber.

The lower limit of the dry density of the formed adsorber may be preferably 0.010 g/cm$^3$ or more, more preferably 0.015 g/cm$^3$ or more, and even more preferably 0.020 g/cm$^3$, 0.030, 0.040, 0.050, or 0.060 g/cm$^3$ or more.

The upper limit of the dry density of the formed adsorber may be preferably 0.400 g/cm$^3$ or less, more preferably 0.300 g/cm$^3$ or less, and even more preferably 0.250 g/cm$^3$ or less.

Setting the dry density in the above range enables obtainment of a formed adsorber having more excellent adsorption and desorption performance per volume required for use in a canister within a range of volume of the adsorbing material that can be stored in the canister. Furthermore, setting the dry density to the lower limit or higher prevents deterioration of the mechanical properties (for example, the strength) even if the formed adsorber has a sheet shape or disk shape. Furthermore, the dry density of the formed adsorber can be adjusted, for example, by changing the fiber diameter of the carbon fiber, changing the fiber length through adjustment of stirring force in defibration of the carbon fiber, or changing the sucking force in suction forming of the mixed slurry containing the binder, and adjusting the dry density may be one of means for optimizing the pressure loss.

N-butane Adsorption and Desorption Performance of Formed Adsorber

In an embodiment of the present invention, the formed adsorber preferably has, as an adsorbing material, given n-butane adsorption and desorption performance. The n-butane adsorption and desorption performance serves as an index of adsorption and desorption performance for vapor and adsorbing materials having excellent n-butane adsorption and desorption performance are thus suitable for use in motor vehicle canisters. The n-butane adsorption and desorption performance can be expressed as an effective adsorption amount ratio for n-butane, which is determined as an amount of adsorbed n-butane per formed adsorber when adsorption is repeated after desorption of n-butane from the adsorbing material under given desorption conditions after sufficient absorption breakthrough of n-butane in the adsorbing material.

In a preferred embodiment of the formed adsorber of the present invention, the effective adsorption-desorption amount ratio (see Equation 8 below) for n-butane found according to a measurement method described with respect to Examples below may be preferably 6.00 wt% or more, more preferably 6.25 wt% or more, and even more preferably 6.50, 6.75, or 7.00 wt% or more.

Furthermore, in a preferred embodiment of the formed adsorber, the effective adsorption-desorption ratio (see Equation 9 below) for n-butane found according to a measurement method described with respect to Examples below may be preferably 25. 0% or more, more preferably 30.0, 40.0, or 50.0% or more, and even more preferably 60.0, 70.0, or 75. 0% or more.

0-ppm Maintaining Time of Formed Adsorber

The 0-ppm maintaining time found according to a measurement method described with respect to Examples below is preferably long in general, but in a preferred embodiment of the formed adsorber of the present invention, a specific numerical value of the 0-ppm maintaining time may be preferably 15 minutes or 30 minutes or more, more preferably 40 minutes or more, and even more preferably 50 minutes, 55 minutes, 60 minutes, 65 minutes, 68 minutes, 69 minutes, or 70 minutes or more.

The longer the 0-ppm maintaining time, the longer it takes for the adsorbing material to start releasing the adsorbed substance. Therefore, the 0-ppm maintaining time serves as an index of the adsorptivity.

2. Shape of Formed Adsorber

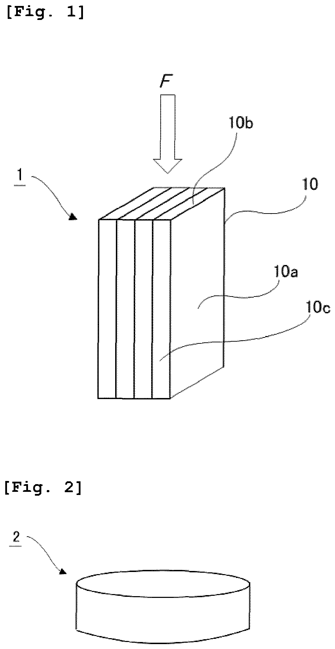

In an embodiment of the present invention, the shape of the formed adsorber is not particularly limited, and for example, a shape that can be molded and enables gas to flow through the formed adsorber is suitable. Specific examples of the shape may include a column shape having end faces that are circular or polygonal, a frustum shape, such as a truncated cone shape or a prismoid shape, a pellet shape, and a honeycomb shape, and may preferably include cylinder shapes and cuboid shapes. Furthermore, plural disk-shaped, sheet-shaped, or plate-shaped formed adsorbers may be layered over one another to be formed into a layered product. FIG. 1 to FIG. 3 illustrate some embodiments. Dimensions, such as lengths and thicknesses, have been schematically illustrated in the drawings to allow the invention to be readily understood and are thus not limited to those illustrated in the drawings.

A layered adsorber 1 illustrated in FIG. 1 is a layered product formed of four formed adsorber sheets 10 superposed on one another. The sheet-shaped formed adsorbers 10 have been formed by superposition of major surfaces 10a of the sheets on one another. In an embodiment, each of these sheets 10 may be obtained by forming a mixture of activated carbon fiber, granular activated carbon, and a binder, into a sheet shape. The binder may preferably be a fibrous binder.

The layered adsorber 1 may be stored in a canister in any way. In a preferred embodiment, the layered adsorber 1 is preferably arranged so that the major surfaces 10a of the sheet-shaped formed adsorbers are not orthogonal to the direction of flow of fluid F, such as vapor, and more preferably, as illustrated in FIG. 1, the layered adsorber 1 may be arranged so that the major surfaces a become approximately parallel to the direction of flow of the fluid F, such as vapor. Arranging the major surfaces a approximately parallel to the flow direction of the fluid F, such as vapor, places lateral end surfaces 10b of the plural sheet-shaped formed adsorbers to be against the flow direction of the fluid F. This arrangement may reduce pressure loss. In FIG. 1, the lateral end surfaces 10b shorter in length are against the flow direction of the fluid F, but without being limited to this arrangement, longer lateral end surfaces 10c may be arranged to be against the flow direction of the fluid F.

Furthermore, the overall shape of the layered adsorber may be cuboidal or cubical.

FIG. 2 illustrates another embodiment of the present invention. In the embodiment illustrated in FIG. 2, the formed adsorber has been formed in a disk shape. Such disk-shaped formed adsorbers may be superposed on one another to form a cylinder shape.

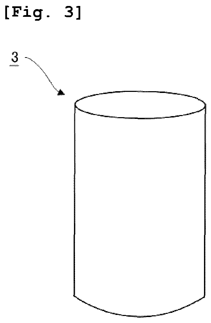

FIG. 3 illustrates another embodiment of the present invention. In the embodiment illustrated in FIG. 3, the formed adsorber has been integrally formed as a cylinder-shaped formed product.

Furthermore, still another embodiment of the present invention may be as follows. Sheets having granular activated carbon adhered to or held on surfaces of activated carbon fiber sheets may be prepared, and the sheets may be attached to each other by use of a binder and formed into a layered adsorber. The layered adsorber may have a structure having the sandwiched granular activated carbon near interfaces between the sheets and the overall appearance of the layered adsorber may be similar to that of the layered adsorber 1 in FIG. 1.

A layered adsorber that is an embodiment of the present invention thus can be readily processed or formed into any of various shapes and is a material having excellent handleability.

3. Activated Carbon Fiber

In an embodiment of the present invention, the activated carbon fiber is used as one type of activated carbon. Embodiments of the activated carbon fiber that may be used in the present invention will hereinafter be described more in detail. Additionally fulfilling at least one or any two or more of given conditions described below may provide a more preferable embodiment of the activated carbon fiber that may be used in the formed adsorber for canisters. Any preferred combination of the following given conditions may be selected as desired according to requirements demanded.

Fiber Diameter of Activated Carbon Fiber

In an embodiment of the present invention, the activated carbon fiber used in the formed adsorber may preferably have a fiber diameter ranging from 6.0 to 70.0 um. More specifically, the fiber diameter is as follows.

In an embodiment of the present invention, the lower limit of the fiber diameter of the activated carbon fiber used in the formed adsorber may be preferably 4.0 um or more, more preferably 6.0 um or more, and even more preferably 8.0, 10.0, 12.0, 14.0, 18.0, 19.0, or 20.0 um or more.

In an embodiment of the present invention, the upper limit of the fiber diameter of the activated carbon fiber used in the formed adsorber may be optional in terms of reduction of pressure loss, but in view of balance between the reduction of pressure loss and the adsorption and desorption performance, the upper limit may be, for example, 70.0 $\mu$m or less, preferably 65.0 or 60.0 $\mu$m or less, and more preferably 59.0, 58.0, 57.0, 56.0, or 55.0 $\mu$m or less.

Setting the fiber diameter of the activated carbon fiber that may be used in the formed adsorber in the above range enables further reduction of the pressure loss in the formed adsorber.

Fiber Length Mean Value of Activated Carbon Fiber (or Mean Fiber Length)

In an embodiment of the present invention, the activated carbon fiber used in the formed adsorber may preferably have a fiber length mean value ranging from 300 to 10000 um. More specifically, the fiber length mean value is as follows.

In an embodiment of the present invention, the lower limit of the fiber length mean value of the activated carbon fiber used in the formed adsorber may be preferably 300 $\mu$m or more, more preferably 500, 600, 700, 800, 850, or 900 $\mu$m or more, and even more preferably 950 $\mu$m or more.

In an embodiment of the present invention, the upper limit of the fiber length mean value of the activated carbon fiber used in the formed adsorber may be preferably 10000, 7500, or 5000 $\mu$m or less, more preferably 4000, 3000, 2500, 2000, or 1500 $\mu$m or less, and even more preferably 1200 $\mu$m or less.

Setting the fiber length mean value of the activated carbon fiber used in the formed adsorber in the above range enables further reduction of the pressure loss in the formed adsorber.

Coefficient of Variation of Fiber Length of Activated Carbon Fiber

In an embodiment of the present invention, the fiber length of the activated carbon fiber used in the formed adsorber may preferably have a coefficient of variation ranging from 0.100 to 2.500. More specifically, the coefficient of variation is as follows.

In an embodiment of the present invention, the lower limit of the coefficient of variation of the fiber length of the activated carbon fiber used in the formed adsorber may be preferably 0.100 or more, more preferably 0.200, 0.300, 0.400, or 0.500 or more, and even more preferably 0.600 or more.

In an embodiment of the present invention, the upper limit of the coefficient of variation of the fiber length of the activated carbon fiber used in the formed adsorber may be preferably 2.500 or less, more preferably 2.000, 1.500, 1.000, 0.900, or 0.800 or less, and even more preferably 0.700 or less.

Setting the coefficient of variation of the fiber length of the activated carbon fiber that may be used in the formed adsorber in the above range enables further reduction of the pressure loss in the formed adsorber.

Fineness of Precursor of Activated Carbon Fiber

To obtain the activated carbon fiber having the fiber diameter as described above, a fiber diameter (as fineness) of fiber serving as a precursor of the activated carbon fiber is preferably in the following range. That is, adopting the following fiber as the precursor may be said to be suitable for obtaining activated carbon fiber that enables reduction in pressure loss.

In an embodiment of the present invention, the fiber serving as the precursor may preferably have a fiber diameter (as fineness) ranging from 4.0 to 70.0 dtex. More specifically, the fiber diameter is as follows.

The lower limit of the fiber diameter (as fineness) of the fiber serving as the precursor may be preferably 4.0 dtex or more, more preferably 5.0 dtex or more, and even more preferably 8.0, 10.0, 12.0, or 15.0 dtex or more.

The upper limit of the fiber diameter (as fineness) of the fiber serving as the precursor may be, for example, 70.0 dtex or less, preferably 65.0 or 60.0 dtex or less, and more preferably 59.0, 58.0, or 57.0 dtex.

Specific Surface Area of Activated Carbon Fiber

In an embodiment of the present invention, the activated carbon fiber used in the formed adsorber may preferably have a specific surface area ranging from 1100 to 2400 $m^2/g$. More specifically, the specific surface area is as follows.

In an embodiment of the present invention, the lower limit of the specific surface area of the activated carbon fiber used in the formed adsorber may be preferably 1100 $m^2/g$ or more, more preferably 1200, 1300, 1400, 1500, or 1600 $m^2/g$ or more, and even more preferably 1700 or 1800 $m^2/g$ or more.

In an embodiment of the present invention, the activated carbon fiber used in the formed adsorber preferably has a wider specific surface area in general in terms of adsorption performance, but for an adsorbing material for canisters, the upper limit of the specific surface area may be about 2400, 2300, 2200, or 2100 $m^2/g$ or less.

Setting the specific surface area of the activated carbon fiber in the above range is suitable for obtaining a formed adsorber excellent in terms of adsorption and desorption performance. Furthermore, it is suitable for maintaining the specific surface area relatively large and reducing the pressure loss.

Total Pore Volume of Activated Carbon Fiber

In an embodiment of the present invention, the activated carbon fiber used in the formed adsorber may preferably have a total pore volume ranging from 0.50 to 1.20 $cm^3/g$. More specifically, the total pore volume is as follows.

In an embodiment of the present invention, the lower limit of the total pore volume of the activated carbon fiber used in the formed adsorber may be preferably 0.50 $cm^3/g$ or more, more preferably 0.60 or 0.70 $cm^3/g$ or more, and even more preferably 0.80 $cm^3/g$ or more.

In an embodiment of the present invention, the upper limit of the total pore volume of the activated carbon fiber used in the formed adsorber may be preferably 1.20 $cm^3/g$ or less, more preferably 1.10 $cm^3/g$ or less, and even more preferably 1.00 $cm^3/g$ or less.

Setting the total pore volume of the activated carbon fiber in the above range is suitable for obtaining a formed adsorber excellent in terms of adsorption and desorption performance and pressure loss, for example.

Mean Pore Size (Mean Pore Diameter) of Activated Carbon Fiber

In an embodiment of the present invention, the activated carbon fiber used in the formed adsorber may preferably have a mean pore size ranging from 1.69 to 4.00 nm. More specifically, the mean pore size is as follows.

In an embodiment of the present invention, the lower limit of the mean pore size of the activated carbon fiber used in the formed adsorber may be preferably 1.69 nm or more, more preferably 1.70 nm or more, and even more preferably 1.72 or 1.75 nm or more.

In an embodiment of the present invention, the upper limit of the mean pore size of the activated carbon fiber used in the formed adsorber may be optional but may be preferably 4.00 nm or less, more preferably 3.50 nm or less, and even more preferably 3.00 nm or less.

Setting the mean pore size of the activated carbon fiber in the above range is suitable for obtaining a formed adsorber excellent in terms of adsorption and desorption performance and pressure loss, for example.

Ultramicropore Volume of Activated Carbon Fiber: $V_{0.7}$

In an embodiment of the present invention, the activated carbon fiber used in the formed adsorber may preferably have an ultramicropore volume ranging from 0.05 to 0.30 $cm^3/g$. More specifically, the ultramicropore volume is as follows.

In an embodiment of the present invention, the lower limit of the ultramicropore volume of the activated carbon fiber used in the formed adsorber may be preferably 0.05 $cm^3/g$ or more, more preferably 0.08 $cm^3/g$ or more, and even more preferably 0.10 $cm^3/g$ or more.

In an embodiment of the present invention, the upper limit of the ultramicropore volume of the activated carbon fiber used in the formed adsorber may be preferably 0.30 $cm^3/g$ or less, more preferably 0.25 $cm^3/g$ or less, and even more preferably 0.23, 0.20, 0.18, or 0.15 $cm^3/g$ or less.

Setting the ultramicropore volume of the activated carbon fiber in the above range is suitable for obtaining a formed adsorber excellent in terms of adsorption and desorption performance and pressure loss, for example.

Micropore Volume of Activated Carbon Fiber: $V_{2.0}$

In an embodiment of the present invention, the activated carbon fiber used in the formed adsorber may preferably have a micropore volume ranging from 0.40 to 1.00 $cm^3/g$. More specifically, the micropore volume is as follows.
In an embodiment of the present invention, the lower limit of the micropore volume of the activated carbon fiber used in the formed adsorber may be preferably 0.40 $cm^3/g$ or more, more preferably 0.50 or 0.55 $cm^3/g$ or more, and even more preferably 0.60 or 0.62 $cm^3/g$ or more.
In an embodiment of the present invention, the upper limit of the micropore volume of the activated carbon fiber used in the formed adsorber may be preferably 1.00 $cm^3/g$ or less, more preferably 0.90 $cm^3/g$ or less, and even more preferably 0.80 $cm^3/g$ or less.
Setting the micropore volume of the activated carbon fiber in the above range is suitable for obtaining a formed adsorber excellent in terms of adsorption and desorption performance and pressure loss, for example.

Pore Volume of Pores Having Pore Size Larger than 0.7 nm and Equal to or Smaller than 2.0 nm: $V_{0.7-2.0}$ (for Activated Carbon Fiber)

In an embodiment of the activated carbon fiber used in the formed adsorber, the pore volume $V_{0.7-2.0}$ of pores having pore sizes larger than 0.7 nm and equal to or smaller than 2.0 nm may preferably range from 0.20 to 1.20 $cm^3/g$. More specifically, the pore volume $V_{0.7-2.0}$ is as follows.
In an embodiment of the activated carbon fiber used in the formed adsorber, the lower limit of the pore volume $V_{0.7-2.0}$ of the pores having pore sizes larger than 0.7 nm and equal to or smaller than 2.0 nm may be preferably 0.20 $cm^3/g$ or more, more preferably 0.30, 0.36, or 0.40 $cm^3/g$ or more, and even more preferably 0.43, 0.45, or 0.50 $cm^3/g$ or more.
In an embodiment of the activated carbon fiber used in the formed adsorber, the upper limit of the pore volume $V_{0.7-2.0}$ of the pores having pore sizes larger than 0.7 nm and equal to or smaller than 2.0 nm may be preferably 1.20 $cm^3/g$ or less, more preferably 1.00 $cm^3/g$ or less, and even more preferably 0.90, 0.80, 0.75, 0.70, 0.65, or 0.60 $cm^3/g$ or less.
Setting the pore volume $V_{0.7-2.0}$ of the activated carbon fiber in the above range is suitable for obtaining a formed adsorber excellent in terms of adsorption and desorption performance and pressure loss, for example.

Ratio of Volume of Ultramicropores to Volume of Micropores: $R_{0.7/2.0}$ (for Activated Carbon Fiber)

In an embodiment of the activated carbon fiber used in the formed adsorber, the ratio $R_{0.7/2.0}$ of the ultramicropore volume to the micropore volume may preferably range from 15.0 to 60.0%. More specifically, the ratio $R_{0.7/2.0}$ is as follows.
In an embodiment of the activated carbon fiber used in the formed adsorber, the lower limit of the ratio $R_{0.7/2.0}$ of the ultramicropore volume to the micropore volume may be preferably 15.0% or more, more preferably 18.0% or more, and even more preferably 19.0% or more.
In an embodiment of the activated carbon fiber used in the formed adsorber, the upper limit of the ratio $R_{0.7/2.0}$ of the ultramicropore volume to the micropore volume may be preferably 60.0% or less, more preferably 50.0% or less, and even more preferably 40.0, 30.0, or 25.0% or less.
Setting the ratio $R_{0.7/2.0}$ of the ultramicropore volume of the activated carbon fiber in the above range is suitable for obtaining a formed adsorber excellent in terms of adsorption and desorption performance and pressure loss, for example.

Basis Weight (Weight Per Unit Area) of Activated Carbon Fiber Sheet

In an embodiment of the present invention, the activated carbon fiber serving as a material to be used in the formed adsorber may be prepared in the form of an activated carbon fiber sheet. The activated carbon fiber sheet preferably has a basis weight in the following range.
In an embodiment of the present invention, the basis weight of the activated carbon fiber used in the formed adsorber may preferably range from 50.0 to 200 $g/m^2$. More specifically, the basis weight is as follows.
The lower limit of the basis weight may be preferably 50.0 $g/m^2$ or more, more preferably 60.0 $g/m^2$ or more, and even more preferably 70.0 or 80.0 $g/m^2$ or more.
The upper limit of the basis weight may be preferably 200 $g/m^2$ or less, more preferably 150 $g/m^2$ or less, and even more preferably 120, 110, or 100 $g/m^2$ or less.

Setting the basis weight in the above range is suitable for obtaining a formed adsorber excellent in terms of adsorption and desorption performance and pressure loss, for example, within a range of volume of the adsorbing material that can be stored in a canister.

Humidity Controlled Density of Activated Carbon Fiber (at Temperature of 23°C and Relative Humidity of 50%)

In an embodiment of the present invention, the activated carbon fiber used in the formed adsorber may preferably have a given density. A humidity controlled density may be an index of density. In the present disclosure, a humidity controlled density is a density measured at 23°C and a relative humidity of 50%.

In an embodiment of the present invention, the activated carbon fiber used in the formed adsorber may preferably have a humidity controlled density ranging from 0.010 to 0.400 $g/cm^3$. More specifically, the humidity controlled density is as follows.

In an embodiment of the present invention, the lower limit of the humidity controlled density (density at 23°C and the relative humidity of 50%) of the activated carbon fiber used in the formed adsorber may be preferably 0.010 $g/cm^3$ or more, more preferably 0.015, 0.020, or 0.030 $g/cm^3$ or more, and even more preferably 0.040 or 0.050 $g/cm^3$ or more.

In an embodiment of the present invention, the upper limit of the humidity controlled density of the activated carbon fiber used in the formed adsorber may be preferably 0.400 $g/cm^3$ or less, more preferably 0.300 $g/cm^3$ or less, and even more preferably 0.200, 0.150, 0.140, 0.130, 0.120, 0.110, or 0.100 $g/cm^3$ or less.

Setting the humidity controlled density of the activated carbon fiber used in the formed adsorber in the above range enables the formed adsorber to be even more excellent in terms of adsorption and desorption performance per volume required for an adsorbing material for canisters. Furthermore, setting the humidity controlled density to or higher than the above lower limit enables the mechanical properties (for example, the strength) to be prevented from being deteriorated. Furthermore, the humidity controlled density of the activated carbon fiber used in the formed adsorber can be adjusted, for example, by changing the fiber diameter of the carbon fiber, changing the fiber length through adjustment of stirring force in defibration of the carbon fiber, or changing the sucking force in suction forming of the mixed slurry containing the binder, and adjusting the humidity controlled density may be one of means for optimizing the pressure loss.

Moisture Content of Activated Carbon Fiber

In an embodiment of the present invention, the activated carbon fiber used in the formed adsorber may preferably have a given moisture content.

In an embodiment of the present invention, the activated carbon fiber used in the formed adsorber may preferably have a moisture content (at 23°C and the relative humidity of 50%) ranging from 1.0 to 30.0%. More specifically, the moisture content is as follows.

In an embodiment of the present invention, the lower limit of the moisture content at 23°C and the relative humidity of 50% may be preferably 1.0% or more, more preferably 2.0% or more, and even more preferably 3.0% or more.

In an embodiment of the present invention, the upper limit of the moisture content at 23°C and the relative humidity of 50% may preferably be 30.0 or 25.0% or less, more preferably 20.0 or 15.0% or less, and even more preferably 10.0 or 8.0% or less.

Setting the moisture content of the activated carbon fiber under the above conditions in the above range is suitable for obtaining a formed adsorber having excellent adsorption and desorption performance.

4. Granular Activated Carbon

In the present disclosure, the granular activated carbon refers to activated carbon having a mean particle size ranging from 100 to 3000 μm.

In an embodiment of the present invention, the granular activated carbon is used as one type of activated carbon. Embodiments of the granular activated carbon that may be used in the present invention will hereinafter be described more in detail. In an embodiment of the present invention, additionally fulfilling at least one or any two or more of given conditions described below may provide a more preferred embodiment of the granular activated carbon that may be used in the formed adsorber for canisters. Any preferred combination of the following given conditions may be selected as desired according to requirements demanded.

Particle Size Mean Value of Granular Activated Carbon

In an embodiment of the present invention, the granular activated carbon used in the formed adsorber may preferably have a mean particle size ranging from 100 to 3000 um. More specifically, the mean particle size is as follows.

In an embodiment of the present invention, the lower limit of the particle size mean value of the granular activated carbon used in the formed adsorber may be preferably 100 $\mu$m or more, more preferably 150, 200, 250, 300, 350, or 400 $\mu$m or more, and even more preferably 450 um or more.

In an embodiment of the present invention, the upper limit of the particle size mean value of the granular activated carbon used in the formed adsorber may be preferably 3000 um or less, more preferably 2500, 2000, 1500, 1000, or 800 um or less, and even more preferably 600 $\mu$m or less.

Setting the particle size mean value of the granular activated carbon used in the formed adsorber in the above range enables further reduction of the pressure loss in the formed adsorber.

Coefficient of Variation of Particle Size of Granular Activated Carbon

In an embodiment of the present invention, the particle size of the granular activated carbon used in the formed adsorber may preferably have a coefficient of variation ranging from 0.02 to 2.500. More specifically, the coefficient of variation is as follows.

In an embodiment of the present invention, the lower limit of the coefficient of variation of the particle size of the granular activated carbon used in the formed adsorber may be preferably 0.01 or more, more preferably 0.025, 0.050, 0.075, 0.100, 0.125, or 0.150 or more, and even more preferably 0.175 or more.

In an embodiment of the present invention, the upper limit of the coefficient of variation of the particle size of the granular activated carbon used in the formed adsorber may be preferably 2.500 or less, more preferably 2.000, 1.500, 1.000, 0.800, 0.600, 0.500, 0.400, or 0.300 or less, and even more preferably 0.200 or less.

Setting the coefficient of variation of the particle size of the granular activated carbon used in the formed adsorber in the above range enables further reduction of the pressure loss in the formed adsorber.

Specific Surface Area of Granular Activated Carbon

In an embodiment of the present invention, the granular activated carbon used in the formed adsorber may preferably have a specific surface area ranging from 1100 to about 2400 $m^2$/g. More specifically, the specific surface area is as follows.

In an embodiment of the present invention, the lower limit of the specific surface area of the granular activated carbon used in the formed adsorber may be preferably 1100 $m^2$/g or more, more preferably 1200, 1300, 1400, 1500, or 1600 $m^2$/g or more, and even more preferably 1700 or 1800 $m^2$/g or more.

In an embodiment of the present invention, the granular activated carbon used in the formed adsorber preferably has a wider specific surface area in general in terms of adsorption performance, but for an adsorbing material for canisters, the upper limit of the specific surface area may be about 2400, 2300, 2200, or 2100 $m^2$/g or less.

Setting the specific surface area of the granular activated carbon in the above range is suitable for obtaining a formed adsorber excellent in terms of adsorption and desorption performance. Furthermore, it is suitable for maintaining the specific surface area relatively large and reducing the pressure loss.

Total Pore Volume of Granular Activated Carbon

In an embodiment of the present invention, the granular activated carbon used in the formed adsorber may preferably have a total pore volume ranging from 0.50 to 1.20 $cm^3$/g. More specifically, the total pore volume is as follows.

In an embodiment of the present invention, the lower limit of the total pore volume of the granular activated carbon used in the formed adsorber may be preferably 0.50 $cm^3$/g or more, more preferably 0.60 or 0.70 $cm^3$/g or more, and even more preferably 0.75 $cm^3$/g or more.

In an embodiment of the present invention, the upper limit of the total pore volume of the granular activated carbon used in the formed adsorber may be preferably 1.20 $cm^3$/g or less, more preferably 1.10 $cm^3$/g or less, and even more preferably 1.00 $cm^3$/g or less.

Setting the total pore volume of the granular activated carbon in the above range is suitable for obtaining a formed adsorber excellent in terms of adsorption and desorption performance and pressure loss, for example.

Mean Pore Size (Mean Pore Diameter) of Granular Activated Carbon

In an embodiment of the present invention, the granular activated carbon contained in the formed adsorber may preferably have a mean pore size ranging from 1.69 to 4.00 nm. More specifically, the mean pore size is as follows.

In an embodiment of the present invention, the lower limit of the mean pore size of the granular activated carbon used in the formed adsorber may be preferably 1.69 nm or more, more preferably 1.70 nm or more, and even more preferably 1.72 or 1.75 nm or more.

In an embodiment of the present invention, the upper limit of the mean pore size of the granular activated carbon used in the formed adsorber may be optional, but may be preferably 4.00 nm or less, more preferably 3.50 nm or less, and even more preferably 3.00 nm or less.

Setting the mean pore size of the granular activated carbon in the above range is suitable for obtaining a formed adsorber excellent in terms of adsorption and desorption performance and pressure loss, for example.

Ultramicropore Volume of Granular Activated Carbon: $V_{0.7}$

In an embodiment of the present invention, the granular activated carbon used in the formed adsorber may preferably have an ultramicropore volume ranging from 0.05 to 0.30 $cm^3/g$. More specifically, the ultramicropore volume is as follows.

In an embodiment of the present invention, the lower limit of the ultramicropore volume of the granular activated carbon used in the formed adsorber may be preferably 0.05 $cm^3/g$ or more, more preferably 0.08 $cm^3/g$ or more, and even more preferably 0.10 $cm^3/g$ or more.

In an embodiment of the present invention, the upper limit of the ultramicropore volume of the granular activated carbon used in the formed adsorber may be preferably 0.30 $cm^3/g$ or less, more preferably 0.25 $cm^3/g$ or less, and even more preferably 0.23, 0.20, 0.18, or 0.15 $cm^3/g$.

Setting the ultramicropore volume of the granular activated carbon in the above range is suitable for obtaining a formed adsorber excellent in terms of adsorption and desorption performance and pressure loss, for example.

Micropore Volume of Granular Activated Carbon: $V_{2.0}$

In an embodiment of the present invention, the granular activated carbon used in the formed adsorber may preferably have a micropore volume ranging from 0.40 to 1.00 $cm^3/g$. More specifically, the micropore volume is as follows.

In an embodiment of the present invention, the lower limit of the micropore volume of the granular activated carbon used in the formed adsorber may be preferably 0.40 $cm^3/g$ or more, more preferably 0.50 or 0.55 $cm^3/g$ or more, and even more preferably 0.60 or 0.62 $cm^3/g$ or more.

In an embodiment of the present invention, the upper limit of the micropore volume of the granular activated carbon used in the formed adsorber may be preferably 1.00 $cm^3/g$ or less, more preferably 0.90 $cm^3/g$ or less, and even more preferably 0.80 $cm^3/g$ or less.

Setting the micropore volume of the granular activated carbon in the above range is suitable for obtaining a formed adsorber excellent in terms of adsorption and desorption performance and pressure loss, for example.

Pore Volume of Pores Having Pore Size Larger than 0.7 nm and Equal to or Smaller than 2.0 nm: $V_{0.7-2.0}$ (Granular Activated Carbon)

In an embodiment of the granular activated carbon used in the formed adsorber, a pore volume $V_{0.7-2.0}$ of pores having pore sizes larger than 0.7 nm and equal to or smaller than 2.0 nm may preferably range from 0.20 to 1.20 $cm^3/g$. More specifically, the pore volume $V_{0.7-2.0}$ is as follows.

In an embodiment of the granular activated carbon used in the formed adsorber, the lower limit of the pore volume $V_{0.7-2.0}$ of the pores having pore sizes larger than 0.7 nm and equal to or smaller than 2.0 nm may be preferably 0.20 $cm^3/g$ or more, more preferably 0.30, 0.36, or 0.40 $cm^3/g$ or more, and even more preferably 0.43, 0.45, or 0.50 $cm^3/g$ or more.

In an embodiment of the granular activated carbon used in the formed adsorber, the upper limit of the pore volume $V_{0.7-2.0}$ of the pores having pore sizes larger than 0.7 nm and equal to or smaller than 2.0 nm may be preferably 1.20 $cm^3/g$ or less, more preferably 1.00 $cm^3/g$ or less, and even more preferably 0.90, 0.80, 0.75, 0.70, 0.65, or 0.60 $cm^3/g$ or less.

Setting the pore volume $V_{0.7-2.0}$ of the granular activated carbon in the above range is suitable for obtaining a formed adsorber excellent in terms of adsorption and desorption performance and pressure loss, for example.

Ratio of Volume of Ultramicropores to Volume of Micropores: $R_{0.7/2.0}$ (for Granular Activated Carbon)

In an embodiment of the granular activated carbon used in the formed adsorber, the ratio $R_{0.7-2.0}$ of the ultramicropore volume to the micropore volume may preferably range from 15.0 to 60.0%. More specifically, the ratio $R_{0.7/2.0}$ is as follows.

In an embodiment of the granular activated carbon used in the formed adsorber, the lower limit of the ratio $R_{0.7/2.0}$ of the ultramicropore volume to the micropore volume may be preferably 15.0% or more, more preferably 18.0% or more, and even more preferably 19.0% or more.

In an embodiment of the granular activated carbon used in the formed adsorber, the upper limit of the ratio $R_{0.7/2.0}$ of the ultramicropore volume to the micropore volume may be preferably 60.0% or less, more preferably 50.0% or less, and even more preferably 40.0, 30.0, or 25.0% or less.

Setting the ratio $R_{0.7/2.0}$ of the ultramicropore volume of the granular activated carbon in the above range is suitable for obtaining a formed adsorber excellent in terms of adsorption and desorption performance and pressure loss, for example.

Humidity Controlled Density of Granular Activated Carbon (at Temperature of 23°C and Relative Humidity of 50%)

In an embodiment of the present invention, the granular activated carbon used in the formed adsorber may preferably have a given density. A humidity controlled density may be an index of density. In the present disclosure, a humidity controlled density is a density measured at 23°C and the relative humidity of 50%.

In an embodiment of the present invention, the granular activated carbon used in the formed product for water purification may preferably have a humidity controlled density (density at 23°C and the relative humidity of 50%) ranging from 0.10 to 0.80 g/cm³. More specifically, the humidity controlled density is as follows.

In an embodiment of the present invention, the lower limit of the humidity controlled density (density at 23°C and the relative humidity of 50%) of the granular activated carbon used in the formed adsorber may be preferably 0.10 g/cm³ or more, and more preferably 0.15, 0.2, 0.25, or 0.30 g/cm³ or more.

In an embodiment of the present invention, the upper limit of the humidity controlled density of the granular activated carbon used in the formed adsorber may be preferably 0.80 g/cm³ or less, and more preferably 0.70, 0.60, 0.55, 0.50, or 0.45 g/cm³ or less.

Setting the moisture content in the above range under the above conditions is suitable for obtaining a formed adsorber excellent in terms of adsorption and desorption performance and pressure loss, for example.

Moisture Content of Granular Activated Carbon

In an embodiment of the present invention, the granular activated carbon used in the formed adsorber may preferably have a given moisture content.

In an embodiment of the present invention, the granular activated carbon used in the formed adsorber may preferably have a moisture content (at 23°C and the relative humidity of 50%) ranging from 1.0 to 30.0%. More specifically, the moisture content is as follows.

In an embodiment of the present invention, the lower limit of the moisture content at 23°C and the relative humidity of 50% may be preferably 1.0% or more, more preferably 2.0% or more, and even more preferably 3.0% or more.

In an embodiment of the present invention, the upper limit of the moisture content at 23°C and the relative humidity of 50% may preferably be 30.0 or 25.0% or less, more preferably 20.0 or 15.0% or less, and even more preferably 10.0 or 8.0% or less.

Setting the moisture content in the above range under the above conditions is suitable for obtaining a formed adsorber excellent in terms of adsorption and desorption performance and pressure loss, for example.

In an embodiment of the present invention, the formed adsorber may contain any other component in addition to the activated carbon fiber, the granular activated carbon, and the binder, but any other component is preferably added so that the effect related to the reduction in the pressure loss is not hindered or substantial significance of the effect is not lost.

5. Canister

The formed adsorber of the present invention is suitable as an adsorbing material to be stored in a motor vehicle canister. That is, the present invention also enables provision of a motor vehicle canister that is another embodiment.

In an embodiment of the present invention, the motor vehicle canister has the above described formed adsorber installed, as an adsorbing material, in the motor vehicle canister. The motor vehicle canister has a structure that is not particularly limited, and any common structure may be adopted. For example, the motor vehicle canister may have the following structure.

A canister comprising:

a housing;
an adsorbing material chamber to store an adsorbing material in the housing;
a first opening to connect between the adsorbing material chamber and an engine and allow gas to move between the adsorbing material chamber and the engine;
a second opening to connect between the adsorbing material chamber and a fuel tank and allow gas to move between the adsorbing material chamber and the fuel tank; and

a third opening to open in response to application of a given pressure to the third opening from the adsorbing material chamber or from outside air, connect between the adsorbing material chamber and the outside air, and allow gas to move between the adsorbing material chamber and the outside air.

In an embodiment of the present invention, the above described formed adsorber of the present invention may be used as the adsorbing material for the canister. As described above, because the formed adsorber of the present invention enables reduction of pressure loss, even if the canister is fully filled with the formed adsorber, the pressure loss is able to be reduced more than that in a case where the canister is filled with conventional activated carbon fiber sheets.

The first, second, and third openings are inlet-outlets through which gas is let in and let out. The arrangement of these openings that are inlet-outlets for gas is not particularly limited, but the third opening that is an inlet-output for outside air is preferably arranged at a position enabling gas to sufficiently pass through the adsorbing material when the gas moves between: the third opening; and the first opening and/or second opening. For example, in an embodiment that may be adopted, the first and second openings are provided on a first lateral surface of the housing and the third opening is provided on a second lateral surface located opposite to the first lateral surface.

The adsorbing material chamber may have more than one chamber. For example, the adsorbing material chamber may be divided into two or more sections by a partition wall or partition walls. The partition walls to be used may be porous plates having gas permeability. Furthermore, an additional adsorbing material chamber may be installed by providing an external second housing separately from the first housing so that the first housing and the second housing are connected to each other via a gas passage. In a case where plural sections or housings are provided as described above, in a preferred embodiment, adsorbing materials or adsorbing material chambers may be arranged so that adsorption capacities in these sections or housings decrease sequentially from one section or housing to the next, from the first or second opening, into which gas from the engine or the fuel tank flows, toward the third opening.

Specific examples may include a composite canister including a main canister (a first housing) and a second canister (a second housing) that is additionally provided to the main canister and that is near the intake for outside air. When plural sections or housings are provided as described above, a high performance canister is able to be provided with reduced cost. Such a high performance canister has: a main body (a first section or a first housing) with the largest storage capacity; and a second or later section or housing with a relatively smaller storage capacity. The main body is a section or housing where vapor from the engine or fuel tank flows into first and conventional and inexpensive activated carbon is to be stored. The second or later section or housing is to store the formed adsorber of the present invention having excellent adsorption and desorption performance for a low concentration.

When there is more than one adsorbing material chamber, fuel vapor flowing, from a preceding layer, into an adsorbing material chamber positioned more downstream from the engine or fuel tank (that is, the adsorbing material chamber positioned closer to the inlet-outlet for outside air) is lower in concentration. Therefore, activated carbon having high n-butane adsorption performance for a low concentration of about 0.2% is suitable as an adsorbing material to be stored in a second section or second housing or a more downstream adsorbing material chamber. This second section or housing or this more downstream adsorbing material chamber is positioned more downstream from the engine or fuel tank. Furthermore, use of the activated carbon in the adsorbing material chamber closer to the intake for outside air enables reduction in the amount of leakage of fuel vapor upon long-term stoppage of the motor vehicle because the effective amount of adsorption-desorption by the formed adsorber of the present invention through purging is large. In view of this effect also, the formed adsorber of the present invention is suitable as an adsorbing material to be used in a motor vehicle canister.

Therefore, a preferred embodiment of the canister may be, for example, as follows.

The canister is a canister for a motor vehicle and includes a main chamber and an auxiliary chamber that each store an adsorbing material,

the auxiliary chamber has a volume to store the adsorbing material, the volume being smaller than that of the main chamber, and the auxiliary chamber is positioned closer to an opening connected to outside air than the main chamber is, and

the adsorbing material of the present invention is stored in the auxiliary chamber.

In the above described embodiment, one main chamber and one auxiliary chamber may be provided, or two or more main chambers and two or more auxiliary chambers may be provided. Furthermore, in a case where three or more adsorbing material chambers are provided, the formed adsorber of the present invention may be stored in at least one adsorbing material chamber of the auxiliary chamber or chambers and may be preferably provided in the auxiliary chamber that is closest to the opening connected to the outside air.

6. Method of Manufacturing Formed Adsorber

The above described formed adsorber of the present invention can be obtained by forming an adsorbing material into a given shape, the adsorbing material including activated carbon fiber, for example. Examples of the activated carbon fiber that may be used include those that satisfy conditions (such as the specific surface area, $V_{0.7\text{-}2.0}$, and $R_{0.7/2.0}$) described above as preferred indices.

In an embodiment of the present invention, the formed adsorber can be obtained by mixing and forming activated carbon fiber, granular activated carbon, and a binder together. Furthermore, as another embodiment of the present invention, a layered product may be formed by attaching activated carbon fiber sheets to each other using a binder, the activated carbon fiber sheets having granular activated carbon adhered to surfaces of the activated carbon fiber sheets.

The activated carbon fiber can be manufactured by, for example, carbonizing and activating fiber having a given fiber diameter. A common method may be adopted for the carbonizing and activating.

Examples of an embodiment for manufacturing the activated carbon fiber sheet using a precursor sheet (a raw material sheet) will be described below.

6-1. Preparation of Raw Material Sheet

(Precursor Fiber Sheet)

Types of Fiber

Examples of fiber forming the raw material sheet may include cellulosic fiber, pitch-based fiber, PAN-based fiber, and phenol resin-based fiber, and preferably include cellulosic fiber.

Cellulosic Fiber

The cellulosic fiber refers to fiber composed mainly of cellulose and/or a derivative thereof. Origins of cellulose and cellulose derivatives may be any one or more of examples including chemically synthesized products, plant derived cellulose, regenerated cellulose, and cellulose produced by bacteria. Examples of the cellulosic fiber that may be preferably used include: fiber formed of a plant cellulose material obtained from plants, such as trees; and fiber formed of a long fibrous regenerated cellulose material obtained by dissolution of a plant cellulose material (such as cotton or pulp) through chemical treatment. Furthermore, the fiber may contain a component or components, such as lignin and/or hemicellulose.

Examples of raw materials for the cellulosic fiber (the plant cellulose material or regenerated cellulose material) may include: plant cellulose fiber, such as cotton (such as short fiber cotton, medium fiber cotton, long fiber cotton, super long cotton, and ultra super long cotton), hemp, bamboo, kozo, mitsumata, banana, and tunicates; regenerated cellulose fiber, such as cuprammonium rayon, viscose rayon, polynosic rayon, and cellulose made from bamboo; purified cellulose fiber spun by use of organic solvent (N-methylmorpholine N-oxide); and acetate fiber, such as diacetate and triacetate. In terms of availability, at least one selected from a group including cuprammonium rayon, viscose rayon, and purified cellulose fiber is preferable among these examples.

Filaments forming the cellulosic fiber preferably have diameters ranging from 5 to 75 um and densities ranging from 1.4 to 1.9 $m^3$/g.

The form of the cellulosic fiber is not particularly limited, and in accordance with the purpose, the cellulosic fiber prepared into a form of, for example, raw yarn (unprocessed yarn), false twisted yarn, dyed yarn, single yarn, folded yarn, or covering yarn, can be used. Furthermore, in a case where the cellulosic fiber includes two or more kinds of raw materials, the cellulosic fiber may be, for example, blended yarn or blended twisted yarn. Furthermore, the above-mentioned raw materials in various forms may be used alone or in combination of two or more, as the cellulosic fiber. Non-twisted yarn is preferred among the above-mentioned raw materials for both moldability and mechanical strength of the composite material.

Fiber Sheet

A fiber sheet refers to a sheet obtained by processing a large number of filaments of fiber into a thin and wide sheet and examples of the fiber sheet may include woven fabric, knitted fabric, and nonwoven fabric.

A method of weaving the cellulosic fiber is not particularly limited, and a common method can be used. Weaves of the woven fabric are not particularly limited either, and any of three foundation weaves, a plain weave, a twill weave, and a satin weave, may be used.

Spaces between warp yarns and between weft yarns of the cellulosic fiber in the woven fabric formed of the cellulosic fiber may be preferably 0.1 to 0.8 mm, more preferably 0.2 to 0.6 mm, and even more preferably 0.25 to 0.5 mm. Furthermore, the woven fabric formed of the cellulosic fiber may have a mass per unit area ranging preferably from 50 to 500 $g/m^2$ and more preferably from 100 to 400 $g/m^2$.

Setting the spaces in the cellulosic fiber and the mass per unit area of the woven fabric formed of the cellulosic fiber in the above ranges enables carbon fiber woven fabric obtained by heat treatment of the woven fabric to have excellent strength.

A method of manufacturing the nonwoven fabric is also not particularly limited. Examples of the method may include: a method where a fiber sheet is obtained by use of a dry method or a wet method with the above-mentioned fiber serving as a raw material and having been cut into appropriate lengths; and a method where a fiber sheet is directly obtained from a solution using, for example, electrospinning. After the nonwoven fabric is obtained, treatment, such as resin bonding, thermal bonding, spun lacing, or needle punching, may be added for the purpose of bonding the filaments of fiber together.

6-2. Catalyst

In Embodiment 1 of a manufacturing method, a catalyst is held by the raw material sheet prepared as described above. The raw material sheet holding the catalyst is carbonized and activated by using gas, such as water vapor, carbon dioxide, or air gas, and a porous activated carbon fiber sheet is thereby able to be obtained. Examples of the catalyst that may be used include a phosphoric acid-based catalyst and an organic sulfonic acid-based catalyst.

Phosphoric Acid-based Catalyst

Examples of the phosphoric acid-based catalyst may include: oxyacids of phosphorus, such as phosphoric acid, metaphosphoric acid, pyrophosphoric acid, phosphorous acid, phosphonic acid, phosphonous acid, and phosphinic acid; ammonium dihydrogen phosphate, diammonium hydrogen phosphate, triammonium phosphate, dimethyl phosphono propanamide, ammonium polyphosphate, and polyphosphonitrile chloride; and condensation products between: phosphoric acid, tetrakis (hydroxymethyl) phosphonium salt, or tris (1-aziridinyl) phosphine oxide; and urea, thiourea, melamine, guanine, cyanamide, hydrazine, dicyandiamide, or a methylol derivative of any one of these. Preferred examples may include diammonium hydrogen phosphate. One kind of phosphoric acid-based catalyst may be used alone or two or more kinds of phosphoric acid-based catalysts may be used in combination. In a case where the phosphoric acid-based catalyst is used in the form of an aqueous solution, the phosphoric acid-based catalyst in the aqueous solution may have a concentration ranging preferably from 0.05 to 2.0 mol/L and more preferably from 0.1 to 1.0 mol/L.

Organic Sulfonic Acid-based Catalyst

An organic compound having one or more sulfo groups can be used as the organic sulfonic acid. For example, a compound in which a sulfo group is bonded to any of various carbon skeletons of aliphatic series or aromatic series can be used. A preferred organic sulfonic acid-based catalyst has a low molecular weight in terms of handling of the catalyst.

Examples of the organic sulfonic acid-based catalyst may include compounds represented by $R-SO_3H$ where: R is a linear or branched alkyl group having 1 to 20 carbon atoms, a cycloalkyl group having 3 to 20 carbon atoms, or an aryl group having 6 to 20 carbon atoms; and each of the alkyl group, the cycloalkyl group and the aryl group optionally has a substituent of an alkyl group, a hydroxyl group, or a halogen group. Examples of the organic sulfonic acid-based catalyst may include methanesulfonic acid, ethanesulfonic acid, propanesulfonic acid, 1-hexanesulfonic acid, vinylsulfonic acid, cyclohexanesulfonic acid, p-toluenesulfonic acid, p-phenolsulfonic acid, naphthalenesulfonic acid, benzenesulfonic acid, and camphorsulfonic acid. Methanesulfonic acid may be preferably used among these examples. Furthermore, one kind of these organic sulfonic acid-based catalysts may be used alone, or two or more kinds of these organic sulfonic acid-based catalysts may be used in combination.

In a case where the organic sulfonic acid is used in the form of an aqueous solution, the organic sulfonic acid in the aqueous solution may have a concentration ranging preferably from 0.05 to 2.0 mol/L and more preferably from 0.1 to 1.0 mol/L.

Mixed Catalyst

The above-mentioned phosphoric acid-based catalyst and organic sulfonic acid-based catalyst may be mixed and used as a mixed catalyst. The mixing ratio may be adjusted as appropriate.

Holding of Catalyst

The catalyst is held by the raw material sheet. "Being held" means that the catalyst is kept in contact with the raw material sheet, and the catalyst may be held in any of various forms through, for example, adhesion, adsorption, or impregnation. A method for the catalyst to be held by the raw material sheet is not particularly limited and examples of the method include a method of immersing the raw material sheet in an aqueous solution containing the catalyst, a method of sprinkling an aqueous solution containing the catalyst over the raw material sheet, a method of causing the raw material sheet to be in contact with vapor that is the catalyst that has been vaporized, and a method of mixing the fiber of the raw material sheet into an aqueous solution containing the catalyst to make paper.

A method that can be preferably used for sufficient carbonization is a method of immersing the raw material sheet in an aqueous solution containing the catalyst to impregnate the fiber with the catalyst such that the catalyst reaches the inside of the fiber. The temperature for the immersion in the aqueous solution containing the catalyst is not particularly limited and may be preferably room temperature. The immersion time ranges preferably from 10 seconds to 120 minutes and more preferably from 20 seconds to 30 minutes. The immersion allows the fiber forming the raw material sheet to adsorb, for example, 1 to 150% by mass and preferably 5 to 60% by mass, of the catalyst. After the immersion, the raw material sheet is preferably taken out from the aqueous solution and dried. A method of drying the raw material sheet may be, for example, any of methods including a method of leaving the raw material sheet to stand at room temperature or putting the raw material sheet in a dryer. The drying may be performed until the sample no longer changes in weight by evaporation of excess moisture after the sample is removed from the aqueous solution containing the catalyst. For example, in the drying at room temperature, the drying time over which the raw material sheet is left to stand may be 0.5 days or more. When the raw material sheet holding the catalyst almost no longer changes in mass through the drying, the step of carbonizing the raw material sheet holding the catalyst is performed.

6-3. Carbonization Treatment

After being prepared, the raw material sheet holding the catalyst is subjected to carbonization treatment. The carbonization treatment for obtaining the activated carbon fiber sheet can be performed according to a common method of carbonizing activated carbon. In a preferred embodiment, the carbonization treatment can be performed as follows.

The carbonization treatment is usually performed under an inert gas atmosphere. According to the present invention, the inert gas atmosphere means an oxygen-free or low-oxygen atmosphere in which carbon is difficult to undergo a combustion reaction and is thus carbonized. For example, the inert gas atmosphere may be preferably an atmosphere including gas, such as argon gas or nitrogen gas.

The raw material sheet holding the catalyst is subjected to heat treatment and carbonized in the given gas atmosphere mentioned above.

In an embodiment of the present invention, a heating temperature in the carbonization treatment may preferably range from 300 to 1400°C. More specifically, the heating temperature is as follows.

The lower limit of the heating temperature may be preferably 300°C or higher, more preferably 350°C or higher, and even more preferably 400°C or higher or 750°C or higher.

The upper limit of the heating temperature may be preferably 1400°C or lower, more preferably 1300°C or lower, and even more preferably 1200°C or lower or 1000°C or lower.

Setting the heating temperature as described above enables obtainment of a carbon fiber sheet with its fiber form maintained. If the heating temperature is lower than the above-mentioned lower limit, the carbon fiber may have a carbon content of 80% or less and carbonization thus tends to be insufficient.

In an embodiment of the present invention, a heat treatment time in the carbonization treatment may preferably range from 10 to 180 minutes including the time for the temperature to rise. More specifically, the heat treatment time is as follows.

The lower limit of the heat treatment time including the time for the temperature to rise may be preferably 10 minutes or more, more preferably 11 minutes or more, even more preferably 12 minutes, 15 minutes, 20 minutes, 25 minutes, or more, and still even more preferably 30 minutes or more.

The upper limit of the heat treatment time may be optional, but may be preferably 180 minutes or less, more preferably 160 minutes, and even more preferably 140 minutes or less.

Sufficiently impregnating the raw material sheet with the catalyst, setting the above-mentioned suitable heating temperature, and adjusting the heat treatment time enable adjustment of the degree of progress of pore formation and thus adjustment of the physical properties of the porous body, such as the specific surface area, the volumes of various pores, and the mean pore diameter.

If the heat treatment time is shorter than the above lower limit, carbonization tends to be insufficient.

Furthermore, the heat treatment may include further reheating treatment in a given gas atmosphere after the above described heat treatment (which may be referred to as primary heat treatment). That is, the carbonization treatment may be performed by dividing the heat treatment into two or more stages having different conditions, such as temperature conditions. Performing the primary heat treatment and the reheating treatment under given conditions may enable adjustment of the physical properties, promotion of the carbonization and the subsequent activation, and thus obtainment of an activated carbon fiber sheet having excellent adsorption and desorption performance.

6-4. Activation Treatment

In an embodiment of the present invention, activation treatment can be performed, for example, continuously after the above described heat treatment, by supplying water vapor or carbon dioxide and maintaining an appropriate activation temperature for a given time period, and the activated carbon fiber sheet is thereby able to be obtained.

In an embodiment of the present invention, a heating temperature in the activation treatment may preferably range from 300 to 1400°C. More specifically, the heating temperature is as follows.

The lower limit of the activation temperature may be preferably 300°C or higher, more preferably 350°C or higher, and even more preferably 400, 500, 600, 700, or 750°C or higher.

The upper limit of the activation temperature, on the other hand, may be preferably 1400°C or lower, more preferably 1300°C or lower, and even more preferably 1200 or 1000°C or lower.

In a case where the activation treatment is performed continuously after the heat treatment, the activation temperature is preferably adjusted to a temperature that is almost the same as the heat treatment temperature.

The lower limit of the activation time may be preferably one minute or more, and more preferably five minutes or more.

The upper limit of the activation time may be optional, but may be preferably 180 minutes or less, more preferably 160 minutes or less, and even more preferably 140 minutes or less, 100 minutes or less, 50 minutes or less, or 30 minutes or less.

6-5. Manufacture of Formed Product

A method of manufacturing a formed product including activated carbon fiber, granular activated carbon, and a binder is not particularly limited, but the formed product can be obtained by, for example, preparing a mixture of the activated carbon fiber, the granular activated carbon, and the binder and forming the mixture. In an embodiment, for example, the formed product can be manufactured as follows.

Preparation of Slurry Including Activated Carbon Fiber, Granular Activated Carbon, and Binder

An activated carbon fiber sheet and a binder that have been prepared in advance are mixed into water, are mixed together through defibration and dispersion by a stirring means, such as a mixer, and slurry (first slurry) including both the activated carbon fiber sheet and the binder is thereby able to be obtained. The activated carbon fiber sheet to be put into the mixer may be put into the mixer after being made into small pieces having appropriate sizes, correspondingly to the size of the mixer.

Granular activated carbon is added to the first slurry and mixed using a stirring means, such as a spatula, and slurry (second slurry) including the activated carbon fiber, the granular activated carbon, and the binder is able to be obtained. When the granular activated carbon is dispersed, the granular activated carbon is preferably stirred gently by, for example, the spatula, such that the granular activated carbon is not crushed.

Formation of Formed Product

The thus obtained second slurry including the activated carbon fiber, the granular activated carbon, and the binder is poured into metal molds having desired shapes, moisture is removed from the poured slurry while the metal molds are being pressed, the molded slurry is thereafter dried, and an adsorber that has been formed is thereby able to be obtained.

Manufacture of Layered Adsorber

In yet another embodiment of the present invention, a formed adsorber having granular activated carbon sandwiched between activated carbon fiber sheets can be manufactured as follows, for example. Firstly, activated carbon fiber sheets are prepared. Granular activated carbon is adhered to major surfaces of the activated carbon fiber sheets, the major surfaces being surfaces to be attached to each other. For example, mixed slurry including the granular activated carbon and a binder may be prepared and the mixed slurry may be applied to the activated carbon fiber sheets, or simple slurry of the granular activated carbon may be adhered onto the activated carbon fiber sheets first and thereafter simple slurry of a binder may be applied to these activated carbon fiber sheets.

**Examples**

The present invention will hereinafter be described specifically by reference to Examples, but the technical scope of the present invention is not limited to Examples below.

Various items related to physical properties and performance of activated carbon fiber, granular activated carbon, and formed adsorbers were measured and evaluated by methods described below. Various numerical values defining the present invention can be determined by the following measurement methods and evaluation methods.

Basic physical properties related to adsorption performance according to JIS K 1477 were referred to as reference standards for the $N_2$ adsorption BET analysis method related to specific surface areas, total pore volumes, and mean pore diameters. Furthermore, the simulation analysis method by the $N_2$ adsorption Grand Canonical Monte Carlo method (GCMC) was referred to as a reference standard for ultramicropore volumes and micropore volumes.

Specific Surface Area

About 30 mg of a measurement sample (an activated carbon fiber sheet, granular activated carbon, or a formed adsorber, the same applying hereinafter) were sampled, vacuum-dried at 200°C for 20 hours, weighed, and then measured using a high-precision gas/vapor adsorption amount measuring apparatus, BELSORP-MAX II (MicrotracBEL Corp.). The amount of nitrogen gas adsorbed at the boiling point of liquid nitrogen (77 K) was measured at a relative pressure ranging from the $10^{-8}$ order to 0.990, and an adsorption isotherm of the sample was thereby prepared. This adsorption isotherm was analyzed by the BET method for which the relative pressure range for analysis had been automatically determined under the conditions of the adsorption isotherm of Type I (ISO 9277), and the BET specific surface area per weight (unit: $m^2/g$) was determined as a specific surface area (unit: $m^2/g$).

Total Pore Volume

The total pore volume (unit: $cm^3/g$) by a one-point method was calculated on the basis of the result at the relative pressure of 0.960 on the adsorption isotherm obtained according to the above section related to the specific surface area.

Mean Pore Size (Mean Pore Diameter); Unit: nm Calculation was performed using Equation 3 below.

$$\text{Mean pore diameter} = 4 \times \text{total pore volume} \times 10^3 \div \text{specific surface area} \qquad \text{(Equation 3)}$$

Ultramicropore Volume

The adsorption isotherm obtained according to the above section related to the specific surface area was analyzed using the analysis software BELMaster pertaining to the high-precision gas/vapor adsorption amount measuring apparatus, BELSORP-MAX II (MicrotracBEL Corp.) through the GCMC method with the analysis settings set as follows: "Smoothing (moving average processing using one point each before and after every analyzed point of the pore distribution)," "Distribution function: No-assumption," "Definition of pore size: Solid and Fluid Def. Pore Size," and "Kernel: Slit-C-Adsorption." The integrated pore volume at 0.7 nm was read from the obtained pore distribution curve for adsorption, the integrated pore volume serving as the micropore volume (unit: $cm^3/g$).

Micropore Volume

The adsorption isotherm obtained according to the above section related to the specific surface area was analyzed using the analysis software BELMaster pertaining to the high-precision gas/vapor adsorption amount measuring apparatus, BELSORP-MAX II (MicrotracBEL Corp.) through the GCMC method with the analysis settings set as follows: "Smoothing (moving average processing using one point each before and after every analyzed point of the pore distribution)," "Distribution function: No-assumption," "Definition of pore size: Solid and Fluid Def. Pore Size," and "Kernel: Slit-C-Adsorption." The integrated pore volume at 2.0 nm was read from the obtained pore distribution curve for adsorption, the integrated pore volume serving as the micropore volume (unit: $cm^3/g$).

Basis Weight of Sheet

After the measurement sample (such as an activated carbon fiber sheet) was allowed to stand for 12 hours or more under the environment where the temperature was $23 \pm 2°C$ and the relative humidity was $50 \pm 5\%$, the basis weight (unit: $g/m^2$) of the sheet was determined from the weight and the lengthwise and widthwise dimensions of the sheet.

Sheet Thickness

The measurement sample (such as an activated carbon fiber sheet) was allowed to stand for 12 hours or more under the environment where the temperature was 23 ± 2°C and the relative humidity was 50 ± 5%, and the thickness (unit: mm) of the sheet was then measured using a small digital thickness measuring device, FS-60DS (Daiei Kagaku Seiki Mfg. Co., Ltd.), with a load of 0.3 kPa applied to the sheet.

Humidity Controlled Density of Sheet; Unit: g/cm$^3$

Calculation was performed using Equation 4 below.

Sheet density = basis weight of sheet ÷ sheet thickness ÷ $10^3$ (Equation 4)

Moisture in Sheet

The measurement sample (such as an activated carbon fiber sheet) was left to stand for 12 hours or more under the environment where the temperature was 23 ± 2°C and the relative humidity was 50 ± 5%, 0.5 to 1.0 g of this measurement sample was thereafter collected as a sample and dried at 115 ± 5°C for three hours or more in a dryer, and moisture (unit: %) was determined from change in weight of the dried sample.

Measurement of Formed Adsorber

Sizes of the formed adsorber were measured using, for example, vernier calipers and a ruler. The dry weight of the formed adsorber was measured using an electrobalance.
Dry Density of Formed Adsorber; Unit: g/cm$^3$ Calculation was performed using Equation 5 below.

Density = dry weight of formed adsorber ÷ volume of formed adsorber (Equation 5)

The volume of the formed adsorber was calculated from results of the measurement of the formed adsorber.

N-butane Adsorption and Desorption Performance

The concentration and flow rate of n-butane and the flow rate of air for desorption were independently set to perform tests by reference to Standard Test Method for Determination of Butane Working Capacity of Activated Carbon (ASTM D5228-16) of the American Society for Testing and Materials Standards.
The formed adsorber was dried at 115 ± 5°C for 3 hours or more in a dryer and the weight of the dried formed adsorber was measured after the dried formed adsorber was cooled. The mass of an empty adsorption container (a stainless-steel frame container that has the same cross-sectional shape as the formed adsorber and allows gas to flow therethrough) was measured and the adsorption container was then filled with the formed adsorber.
Subsequently, the test tube is placed in a flow apparatus and n-butane gas diluted with air to a concentration of 0.2% is fed into the test tube at 1.0 L/min at a test temperature of 25°C to cause adsorption of n-butane. The test tube is removed from the flow apparatus and the mass of the test tube removed is measured. This feeding of the 0.2% n-butane gas was repeated until constant mass was achieved, that is, until the amount of adsorption was saturated.
The test tube was reinstalled in the flow apparatus and air was fed into the test tube at a test temperature of 25°C for 12 minutes at 20.0 L/min to cause desorption of n-butane. The test tube was removed from the flow apparatus and the mass of the test tube removed was measured.

Measurement of 0-ppm Maintaining Time

The change in concentration in adsorption and desorption upon the feeding of n-butane was measured, using a portable gas detector, Cosmotector (model number: XP-3160, manufacturer: New Cosmos Electric Co., Ltd.), every six seconds.
A time over which 0 ppm was maintained continuously from the beginning in second adsorption was determined as a 0-ppm maintaining time (minutes), the second adsorption being after first adsorption and first desorption. This 0 ppm was defined as change in concentration in the second adsorption, the change being less than the quantification lower limit (25 ppm).
This adsorption and desorption operation was repeated so as to be performed twice in total, and the first adsorption amount, the effective adsorption-desorption amount, the effective adsorption-desorption amount ratio, and the effective adsorption-desorption ratio were calculated using Equations 6, 7, 8, and 9 below.

$$\text{First adsorption amount = first amount of n-butane adsorbed} \qquad \text{Equation 6}$$

The unit of the numerical value is as follows.
First amount of n-butane adsorbed (unit: g)

$$\text{Effective adsorption-desorption amount = (second amount of n-butane adsorbed + second amount of n-butane desorbed)} \div 2 \qquad \text{Equation 7}$$

The units of the numerical values are as follows.

Effective adsorption-desorption amount (unit: g)
Second amount of n-butane adsorbed (unit: g)
Second amount of n-butane desorbed (unit: g)

$$\text{Effective adsorption-desorption amount ratio = effective adsorption-desorption amount} \div \text{dry weight of formed adsorber} \times 100 \qquad \text{Equation 8}$$

The units of the numerical values are as follows.

Effective adsorption-desorption amount ratio (unit: wt%)
Effective adsorption-desorption amount (unit: g)
Dry weight of formed adsorber (unit: g)

$$\text{Effective adsorption-desorption ratio = effective adsorption-desorption amount} \div \text{first adsorption amount} \times 100 \qquad \text{Equation 9}$$

The units of the numerical values are as follows.

Effective adsorption-desorption ratio (unit: %)
Effective adsorption-desorption amount (unit: g)
First adsorption amount (unit: g)

Measurement of Pressure Loss

Formed adsorbers of Examples, Reference Examples, and Comparative Examples were prepared. A frame body (a frame container) that is a cylindrical container and is open at one end surface and another end surface opposite to that one end surface to allow ventilation therethrough in a direction orthogonal to the end surfaces was prepared as a container to store a formed adsorber. The end surfaces of the frame container prepared each had a diameter (inner diameter) of 6.2 cm (that is, the areas of the openings at the surfaces were 30.18 cm$^2$). The frame container was fully filled with the formed adsorber prepared and the frame container filled with the formed adsorber was used as a test sample for measurement of pressure loss.
The pressure loss was measured as follows. Air was fed to the test sample prepared as described above at 60 L/min and a result of measurement of differential pressure between the entrance and the exit of the test sample was determined as a pressure loss (kPa), the measurement using a differential pressure meter, testo 510 (Testo K.K.).

(M1) Manufacture of Activated Carbon Fiber Sheet

A needle-punched nonwoven fabric made of rayon fiber (17 dtex, a fiber length of 76 mm) and having a basis weight of 400 g/m$^2$ was impregnated with 6 to 10% diammonium hydrogen phosphate aqueous solution, wrung out, and dried thereafter, to have 8 to 10% by weight of diammonium hydrogen phosphate attached to the nonwoven fabric. The obtained pretreated nonwoven fabric was heated in a nitrogen atmosphere to 900°C in 40 minutes and was kept at this temperature for three minutes. Continuously at that temperature, activation treatment was performed for 17 minutes in a nitrogen gas stream containing water vapor with a dew point of 71°C, and an activated carbon fiber sheet was thereby obtained.

(M2) Manufacture of Activated Carbon Fiber

Webbed rayon fiber (56 dtex, a fiber length of 102 mm) having a basis weight of 400 g/m$^2$ obtained through a carding machine was impregnated with 6 to 10% diammonium hydrogen phosphate aqueous solution, wrung out, and dried thereafter, to have 8 to 10% by weight of diammonium hydrogen phosphate attached to the fiber. The obtained pretreated fiber was heated in a nitrogen atmosphere to 900°C in 45 minutes and was kept at this temperature for three minutes. Continuously at that temperature, activation treatment was performed for 17 minutes in a nitrogen gas stream containing water vapor with a dew point of 71°C, and activated carbon fiber was thereby obtained.

Reference Example 1 (Activated Carbon Fiber:Granular Activated Carbon = 100:0)

Into a mixer, 5 parts by weight (0.28 g) of a fibrous binder that was acrylic fiber 50TWF manufactured by Japan Exlan Co., Ltd. and 0.5 L of water were put, this mixture was subjected to defibration and dispersion for 30 seconds, 100 parts by weight (5.60 g) of the activated carbon fiber sheet obtained as described above (M1) and 0.5 L of water were added to the mixture subsequently, the added mixture was subjected to further defibration and dispersion for ten seconds, and slurry (first slurry) having the activated carbon fiber that has been defibrated and dispersed therein was thereby obtained. A metallic cylinder that is able to be divided at a position 18 mm from the bottom of the metallic cylinder and has an inner diameter of 63 mm and a height of 400 mm was placed on a funnel including a porous plate for suction dewatering, the first slurry was poured into the metallic cylinder, and thereafter, suction dewatering was performed from the bottom for forming. A bottom portion of the metallic cylinder was separated, the bottom portion being up to 18 mm from the bottom and containing the moist formed product, the separated metallic cylinder was sandwiched between punching plates at upper and lower cross-sectional surfaces of the separated metallic cylinder, a one-kilogram weight was placed thereon, the formed product was dried at 120°C for four hours in a state of having been squashed to a height of 18 mm, the metallic cylinder was thereafter removed from the formed product, and 5.80 g of an adsorber that has been formed into a disk shape having an outer diameter of 62 mm and a height of 18 mm was obtained. The obtained formed adsorber was more difficult to be deformed than the activated carbon fiber sheet.

Reference Example 2 (Activated Carbon Fiber:Granular Activated Carbon = 100:0)

5.80 g of a formed adsorber having the outer diameter of 62 mm and the height of 18 mm was obtained by a method similar to that in Reference Example 1, except that 5 parts by weight (0.28 g) of the fibrous binder used in Reference Example 1 and 100 parts by weight (5.61 g) of the activated carbon fiber (M2) in place of the activated carbon fiber sheet (M1) used in Reference Example 1 were used instead. The obtained formed adsorber was more difficult to be deformed than the activated carbon fiber.

Example 1 (Activated Carbon Fiber:Granular Activated Carbon = 90:10)

Into a mixer, 5 parts by weight (0.28 g) of the fibrous binder used in Reference Example 1 and 0.5 L of water were put, this mixture was subjected to defibration and dispersion for 30 seconds, 90 parts by weight (5.04 g) of the activated carbon fiber sheet used in Reference Example 1 and 0.5 L of water were added to the mixture, the added mixture was subjected to further defibration and dispersion for ten seconds, and first slurry was thereby obtained.
Subsequently, 10 parts by weight (0.56 g) of granular activated carbon (a specific surface area of 1660 m$^2$/g, a mean particle size of 502 um, a standard deviation of 89 $\mu$m) were added to the first slurry, this mixture was stirred with a spatula, and second slurry having the activated carbon fiber and granular activated carbon dispersed therein was obtained. The second slurry was subjected to suction dewatering by a method similar to that in Example 1, dried, and 5.85 g of a formed adsorber having the outer diameter of 62 mm, the height of 18 mm, and a disk shape was obtained. The obtained formed adsorber was more difficult to be deformed than the activated carbon fiber sheet.

Example 2 (Activated Carbon Fiber:Granular Activated Carbon = 70:30)

5.77 g of a formed adsorber having the outer diameter of 62 mm and the height of 18 mm was obtained by a method similar to that in Example 1, except that 5 parts by weight (0.28 g) of the fibrous binder used in Example 1, 70 parts by weight (3.91 g) of the activated carbon fiber sheet used in Example 1, and 30 parts by weight (1.68 g) of the granular activated carbon used in Example 1 were used instead. The obtained formed adsorber was more difficult to be deformed than the activated carbon fiber sheet.

Example 3 (Activated Carbon Fiber:Granular Activated Carbon = 60:40)

5.80 g of a formed adsorber having the outer diameter of 62 mm and the height of 18 mm was obtained by a method similar to that in Example 1, except that 5 parts by weight (0.28 g) of the fibrous binder used in Example 1, 60 parts by weight (3.37 g) of the activated carbon fiber sheet used in Example 1, and 40 parts by weight (2.25 g) of the granular activated carbon used in Example 1 were used instead. The obtained formed adsorber was more difficult to be deformed than the activated carbon fiber sheet.

Example 4 (Activated Carbon Fiber:Granular Activated Carbon = 50:50)

5.99 g of a formed adsorber having the outer diameter of 62 mm and the height of 18 mm was obtained by a method similar to that in Example 1, except that 5 parts by weight (0.29 g) of the fibrous binder used in Example 1, 50 parts by weight (2.88 g) of the activated carbon fiber sheet used in Example 1, and 50 parts by weight (2.88 g) of the granular activated carbon used in Example 1 were used instead. The obtained formed adsorber was more difficult to be deformed than the activated carbon fiber sheet.

Example 5 (Activated Carbon Fiber:Granular Activated Carbon = 30:70)

Second slurry was obtained by a method similar to that in Example 1, except that 5 parts by weight (0.29 g) of the fibrous binder used in Example 1, 30 parts by weight (1.71 g) of the activated carbon fiber sheet used in Example 1, and 70 parts by weight (4.00 g) of the granular activated carbon used in Example 1 were used instead.

A metallic cylinder that is able to be divided at a position 18 mm from the bottom of the metallic cylinder and has an inner diameter of 63 mm and a height of 400 mm was placed on a funnel including a porous plate for suction dewatering, the second slurry was poured into the metallic cylinder, and thereafter, suction dewatering was performed from the bottom for forming. A bottom portion of the metallic cylinder was separated, the bottom portion being up to 18 mm from the bottom and containing the moist formed product, the separated metallic cylinder was dried at 120°C for four hours, the metallic cylinder was thereafter removed from the formed product, and 5.89 g of an adsorber having an outer diameter of 62 mm and a height of 16 mm was obtained. The obtained formed adsorber was more difficult to be deformed than the activated carbon fiber sheet.

Example 6 (Activated Carbon Fiber:Granular Activated Carbon = 10:90)

6.00 g of a formed adsorber having the outer diameter of 62 mm and a height of 10 mm was obtained by a method similar to that in Example 5, except that 5 parts by weight (0.29 g) of the fibrous binder used in Example 1, 10 parts by weight (0.58 g) of the activated carbon fiber sheet used in Example 1, and 90 parts by weight (5.22 g) of the granular activated carbon used in Example 1 were used instead. The obtained formed adsorber was more difficult to be deformed than the activated carbon fiber sheet.

Example 7 (Activated Carbon Fiber:Granular Activated Carbon = 60:40)

5.80 g of a formed adsorber having the outer diameter of 62 mm and the height of 18 mm was obtained by a method similar to that in Example 1, except that 5 parts by weight (0.28 g) of the fibrous binder used in Example 1, 60 parts by weight (3.37 g) of the activated carbon fiber sheet used in Example 1, and 40 parts by weight (2.25 g) of granular activated carbon (a specific surface area of 1860 $m^2$/g, a mean particle size of 269 um, a standard deviation of 65 um) in place of the granular activated carbon used in Example 1 were used instead. The obtained formed adsorber was more difficult to be deformed than the activated carbon fiber sheet.

Example 8 (Activated Carbon Fiber:Granular Activated Carbon = 90:10)

5.80 g of a formed adsorber having the outer diameter of 62 mm and the height of 18 mm was obtained by a method similar to that in Example 1, except that 5 parts by weight (0.28 g) of the fibrous binder used in First Example, 90 parts by weight (5.04 g) of the activated carbon fiber (M2) in place of the activated carbon fiber sheet (M1) used in Example 1, and 10 parts by weight (0.56 g) of the granular activated carbon used in Example 1 were used instead. The obtained formed adsorber was more difficult to be deformed than the activated carbon fiber.

Example 9 (Activated Carbon Fiber:Granular Activated Carbon = 60:40)

5.75 g of a formed adsorber having the outer diameter of 62 mm and the height of 18 mm was obtained by a method similar to that in Example 1, except that 5 parts by weight (0.28 g) of the fibrous binder used in Example 1, 60 parts by weight (3.37 g) of the activated carbon fiber (M2) in place of the activated carbon fiber sheet (M1) used in Example 1, and 40 parts by weight (2.25 g) of the granular activated carbon used in Example 1 were used instead. The obtained formed adsorber was more difficult to be deformed than the activated carbon fiber.

Example 10 (Activated Carbon Fiber:Granular Activated Carbon = 10:90)

5.80 g of a formed adsorber having the outer diameter of 62 mm and the height of 10 mm was obtained by a method similar to that in Example 5, except that 5 parts by weight (0.28 g) of the fibrous binder used in Example 1, 10 parts by weight (0.57 g) of the activated carbon fiber(M2) in place of the activated carbon fiber sheet (M1) used in Example 1, and 90 parts by weight (5.03 g) of the granular activated carbon used in Example 1 were used instead. The obtained formed adsorber was more difficult to be deformed than the activated carbon fiber.

Comparative Example 1 (Activated Carbon Fiber:Granular Activated Carbon = 0:100)

Into a mixer, 5 parts by weight (0.32 g) of the fibrous binder used in Example 1 and 0.5 L of water were put, this mixture was subjected to defibration and dispersion for 30 seconds, 100 parts by weight (6.43 g) of the granular activated carbon 1 used in Example 1 and 0.5 L of water were added to the mixture subsequently, the added mixture was stirred with a spatula, and granular activated carbon adsorption slurry was thereby obtained. This adsorption slurry was subjected to suction dewatering by a method similar to that in Example 5, dried, and 6.71 g of a formed adsorber having the outer diameter of 62 mm, a height of 6 mm, and a disk shape was obtained.

Comparative Example 2 (Activated Carbon Fiber:Granular Activated Carbon = 0:100)

6.62 g of a formed adsorber having the outer diameter of 62 mm, a height of 7 mm, and a disk shape was obtained by a method similar to that in Comparative Example 1, except that 100 parts by weight (6.30 g) of granular activated carbon (a specific surface area of 1860 $m^2$/g, a mean particle size of 269 $\mu$m, a standard deviation of 65 um) were used in place of the granular activated carbon used in Comparative Example 1.

For each of adsorbing materials for Examples 1 to 10, Reference Examples 1 and 2, and Comparative Examples 1 and 2, measured values were obtained according to the above described measurement methods for the above described items of physical properties. Results of the measurement are listed in Table 1. Furthermore, characteristics of the formed adsorbers of Examples 1 to 10, Reference Examples 1 and 2, and Comparative Examples 1 and 2 are listed in Table 2-1, Table 2-2, Table 2-3, Table 3-1, Table 3-2, and Table 3-3. In these tables, the term, "ACF," is an abbreviation for activated carbon fiber.

Table 1

| Table 1: Characteristics of adsorbing materials | | | For Examples 1 to 7 and Reference Example 1 | For Examples 8 to 10 and Reference Example 2 | For Examples 1 to 6 and 8 to 10 and Comparative Example 1 | For Example 7 and Comparative Example 2 |
|---|---|---|---|---|---|---|
| Types of adsorbing materials | | | **ACF** | **ACF** | **Granular activated carbon** | **Granular activated carbon** |
| Fineness of ACF precursor | | dtex | 17 | **56** | - | - |
| $N_2$ adsorption BET analysis | Specificsurface area | $m^2$/g | **1850** | **1972** | **1660** | **1860** |
| | Total pore volume | $cm^3$/g | **0.82** | **0.94** | **0.77** | **0.92** |
| | Mean pore diameter | nm | **1.78** | **1.91** | **1.85** | **1.98** |

(continued)

| Table 1: Characteristics of adsorbing materials | | | For Examples 1 to 7 and Reference Example 1 | For Examples 8 to 10 and Reference Example 2 | For Examples 1 to 6 and 8 to 10 and Comparative Example 1 | For Example 7 and Comparative Example 2 |
|---|---|---|---|---|---|---|
| Types of adsorbing materials | | | ACF | ACF | Granular activated carbon | Granular activated carbon |
| $N_2$ adsorption GCMC analysis | a) Ultramicropore volume[1] | cm³/g | 0.15 | 0.13 | 0.13 | 0.15 |
| | b) Micropore volume[2] | cm 3/g | 0.66 | 0.68 | 0.60 | 0.65 |
| | b) - a) | cm³/g | 0.51 | 0.56 | 0.47 | 0.50 |
| | a) / b) | % | 22.6 | 18.4 | 22.3 | 22.9 |
| Physical properties of sheet | Basis weight | g/m² | 126.9 | - | - | - |
| | Thickness | mm | 3.17 | - | - | - |
| Humidity controlled density (at 23°C and RH of 50%) | | g/cm3 | 0.04 | - | 0.37 | 0.39 |
| Moisture (at 23°C and RH of 50%) | | % | 4.7 | 12.1 | 10.7 | 7.3 |
| 1) Pore size of 0.7 nm or less 2) Pore size of 2.0 nm or less | | | | | | |

| Table 2-1: Characteristics of formed adsorbers | | | | Reference Example 1 | Reference Example 2 | Example 1 | Example 2 | Example 3 | Example 4 |
|---|---|---|---|---|---|---|---|---|---|
| Type of formed adsorber | | | | ACF | ACF | ACF and granular activated carbon | ACF and granular activated carbon | ACF and granular activated carbon | ACF and granular activated carbon |
| Mixing ratio | Activated carbon fiber | Parts by weight[1] | - | 100 | 100 | 90 | 70 | 60 | 50 |
| | Granular activated carbon | Parts by weight[1] | - | 0 | 0 | 10 | 30 | 40 | 50 |
| | Fibrous binder | Parts by weight[1] | - | 5 | 5 | 5 | 5 | 5 | 5 |
| $N_2$ adsorption BET analysis | Specific surface area | m²/g | | 1820 | 1880 | 1832 | 1760 | 1760 | 1710 |
| | Total pore volume | cm³/g | | 0.82 | 0.90 | 0.83 | 0.80 | 0.80 | 0.78 |
| | Mean pore diameter | nm | | 1.78 | 1.91 | 0.60 | 1.81 | 1.82 | 1.82 |

(continued)

| Table 2-1: Characteristics of formed adsorbers | | | | Reference Example 1 | Reference Example 2 | Example 1 | Example 2 | Example 3 | Example 4 |
|---|---|---|---|---|---|---|---|---|---|
| Type of formed adsorber | | | | ACF | ACF | ACF and granular activated carbon | ACF and granular activated carbon | ACF and granular activated carbon | ACF and granular activated carbon |
| N$_2$ adsorption GCMC analysis | **a)** Ultramicropore volume[2] | cm$^3$/g | | 0.13 | 0.12 | 0.12 | 0.13 | 0.13 | 0.13 |
| | **b)** Micropore volume[3] | cm$^3$/g | | 0.64 | 0.65 | 0.58 | 0.63 | 0.63 | 0.63 |
| | **b) - a)** | cm$^3$/g | | 0.51 | 0.52 | 0.45 | 0.50 | 0.49 | 0.50 |
| | **a) / b)** | % | | 20.4 | 19.1 | 21.5 | 20.3 | 22.2 | 20.7 |
| 1) Dry basis 2) Pore size of 0.7 nm or less 3) Pore size of 2.0 nm or less | | | | | | | | | |

| Table 2-2: Characteristics of formed adsorbers | | | | Example 5 | Example 6 | Example 7 | Example 8 | Example 9 | Example 10 |
|---|---|---|---|---|---|---|---|---|---|
| Type of formed adsorber | | | | ACF and granular activated carbon | ACF and granular activated carbon | ACF and granular activated carbon | ACF and granular activated carbon | ACF and granular activated carbon | ACF and granular activated carbon |
| Mixing ratio | Activated carbon fiber | Parts by weight[1] | - | 30 | 10 | 60 | 90 | 60 | 10 |
| | Granular activated carbon | Parts by weight[1] | - | 70 | 90 | 40 | 10 | 40 | 90 |
| | Fibrous binder | Parts by weight[1] | - | 5 | 5 | 5 | 5 | 5 | 5 |
| N$_2$ adsorption BET analysis | Specific surface area | m$^2$/g | | 1660 | 1660 | 1780 | 1850 | 1760 | 1610 |
| | Total pore volume | cm$^3$/g | | 0.76 | 0.75 | 0.81 | 0.88 | 0.83 | 0.75 |
| | Mean pore diameter | nm | | 0.60 | 1.82 | 1.82 | 1.90 | 1.89 | 1.86 |

(continued)

| Table 2-2: Characteristics of formed adsorbers | | | Example 5 | Example 6 | Example 7 | Example 8 | Example 9 | Example 10 |
|---|---|---|---|---|---|---|---|---|
| Type of formed adsorber | | | ACF and granular activated carbon | ACF and granular activated carbon | ACF and granular activated carbon | ACF and granular activated carbon | ACF and granular activated carbon | ACF and granular activated carbon |
| $N_2$ adsorption GCMC analysis | **a)** Ultramicropore volume[2] | $cm^3/g$ | 0.15 | 0.13 | 0.13 | 0.12 | 0.13 | 0.13 |
| | **b)** Micropore volume[3] | $cm^3/g$ | 0.60 | 0.58 | 0.60 | 0.64 | 0.62 | 0.58 |
| | **b) - a)** | $cm^3/g$ | 0.45 | 0.45 | 0.47 | 0.52 | 0.49 | 0.45 |
| | **a) / b)** | % | 25.1 | 22.7 | 21.7 | 19.4 | 20.3 | 22.0 |
| 1) Dry basis 2) Pore size of 0.7 nm or less 3) Pore size of 2.0 nm or less | | | | | | | | |

| Table 2-3: Characteristics of formed adsorbers | | | | Comparative Example 1 | Comparative Example 2 |
|---|---|---|---|---|---|
| Type of formed adsorber | | | | Granular activated carbon | Granular activated carbon |
| Mixing ratio | Activated carbon fiber | Parts by weight[1] | - | 0 | 0 |
| | Granular activated carbon | Parts by weight[1] | - | 100 | 100 |
| | Fibrous binder | Parts by weight[1] | - | 5 | 5 |
| $N_2$ adsorption BET analysis | | Specific surface area | $m^2/g$ | 1630 | 1720 |
| | | Total pore volume | $cm^3/g$ | 0.75 | 0.84 |
| | | Mean pore diameter | nm | 1.84 | 1.95 |
| $N_2$ adsorption GCMC analysis | | **a)** Ultramicropore volume[2] | $cm^3/g$ | 0.13 | 0.13 |
| | | **b)** Micropore volume[3] | $cm^3/g$ | 0.58 | 0.58 |
| | | **b) - a)** | $cm^3/g$ | 0.46 | 0.45 |
| | | **a) / b** | % | 21.5 | 23.0 |
| 1) Dry basis 2) Pore size of 0.7 nm or less 3) Pore size of 2.0 nm or less | | | | | |

| Table 3-1: Characteristics of formed adsorbers | | | | | | | | |
|---|---|---|---|---|---|---|---|---|
| | | | Reference Example 1 | Reference Example 2 | Example 1 | Example 2 | Example 3 | Example 4 |
| ACF fiber diameter | | μm | 28.3 | 51.3 | 28.3 | 28.3 | 28.3 | 28.3 |
| ACF fiber length | Mean value | μm | 1008 | 1132 | 1008 | 1008 | 1008 | 1008 |
| | Standard deviation | μm | 671 | 734 | 671 | 671 | 671 | 671 |
| | Coefficient of variation[1] | - | 0.67 | 0.65 | 0.67 | 0.67 | 0.67 | 0.67 |
| Particle size of granular activated carbon | Mean value | μm | - | - | 502 | 502 | 502 | 502 |
| | Standard deviation | μm | - | 0.6015 | 89 | 89 | 89 | 89 |
| | Coefficient of variation[1] | - | - | - | 0.18 | 0.18 | 0.18 | 0.18 |
| Dry weight | | 9 | 5.80 | 5.80 | 5.85 | 5.77 | 5.80 | 5.99 |
| Volume | | cm$^3$ | 54.3 | 54.3 | 54.3 | 54.3 | 54.3 | 54.3 |
| Dry density | | g/cm3 | 0.107 | 0.107 | 0.108 | 0.106 | 0.107 | 0.110 |
| 0.2% n-butane adsorption-desorption performance | First adsorption amount | g | 0.61 | 0.59 | 0.60 | 0.59 | 0.62 | 0.59 |
| | Effective adsorption-desorption amount[2] | g | 0.47 | 0.47 | 0.46 | 0.44 | 0.47 | 0.47 |
| | Effective adsorption-desorption amount ratio[3] | wt% | 8.1 | 8.0 | 7.9 | 7.7 | 8.0 | 7.8 |
| | Effective adsorption-desorption ratio[4] | % | 77 | 80 | 77 | 75 | 75 | 79 |
| | 0-ppm maintaining time[5] | min | 70 | 72 | 71 | 76 | 68 | 70 |
| Pressure loss | | kPa | 0.55 | 0.26 | 0.50 | 0.39 | 0.33 | 0.29 |

1) Standard deviation/mean value 2) Mean of second adsorption amount and second desorption amount
3) (Effective adsorption-desorption amount/weight of formed adsorber) x 100 (wt%)
4) (Effective adsorption-desorption amount/first adsorption amount) x 100 (%)
5) 0-ppm maintaining time in second adsorption

| Table 3-2: Characteristics of formed adsorbers | | | Example 5 | Example 6 | Example 7 | Example 8 | Example 9 | Example 10 |
|---|---|---|---|---|---|---|---|---|
| ACF fiber diameter | | μm | 28.3 | 28.3 | 28.3 | 51.3 | 51.3 | 51.3 |
| ACF fiber length | Mean value | μm | 1008 | 1008 | 1008 | 1132 | 1132 | 1132 |
| | Standard deviation | μm | 671 | 671 | 671 | 734 | 734 | 734 |
| | Coefficient of variation[1] | - | 0.67 | 0.67 | 0.67 | 0.65 | 0.65 | 0.65 |
| Particle size of granular activated carbon | Mean value | μm | 502 | 502 | 269 | 502 | 502 | 502 |
| | Standard deviation | μm | 89 | 89 | 65 | 89 | 89 | 89 |
| | Coefficient of variation[1] | - | 0.18 | 0.18 | 0.24 | 0.18 | 0.18 | 0.18 |
| Dry weight | | g | 5.89 | 6.00 | 5.80 | 5.80 | 5.75 | 5.80 |
| Volume | | $cm^3$ | 48.3 | 30.2 | 54.3 | 54.3 | 54.3 | 30.2 |
| Dry density | | $g/cm^3$ | 0.122 | 0.199 | 0.107 | 0.107 | 0.106 | 0.192 |
| 0.2% n-butane adsorption-desorption performance | First adsorption amount | g | 0.59 | 0.62 | 0.60 | 0.59 | 0.58 | 0.58 |
| | Effective adsorption-desorption amount[2] | g | 0.45 | 0.42 | 0.45 | 0.46 | 0.43 | 0.42 |
| | Effective adsorption-desorption amount ratio[3] | wt% | 7.6 | 7.1 | 7.8 | 7.9 | 7.5 | 7.2 |
| | Effective adsorption-desorption ratio[4] | % | 76 | 68 | 75 | 78 | 75 | 72 |
| | 0-ppm maintaining time[5] | min | 60 | 50 | 74 | 71 | 71 | 48 |
| Pressure loss | | kPa | 0.23 | 0.32 | 0.35 | 0.23 | 0.16 | 0.15 |
| 1) Standard deviation/mean value 2) Mean of second adsorption amount and second desorption amount 3) (Effective adsorption-desorption amount/weight of formed adsorber) x 100 (wt%) 4) (Effective adsorption-desorption amount/first adsorption amount) x 100 (%) 5) 0-ppm maintaining time in second adsorption | | | | | | | | |

| Table 3-3: Characteristics of formed adsorbers | | | | Comparative Example 1 | Comparative Example 2 |
|---|---|---|---|---|---|
| ACF fiber diameter | | | μm | - | - |
| ACF fiber length | Mean value | | μm | - | - |
| | Standard deviation | | μm | - | - |
| | Coefficient of variation[1] | | - | - | - |
| Particle size of granular activated carbon | Mean value | | μm | 502 | 269 |
| | Standard deviation | | μm | 89 | 65 |
| | Coefficient of variation[1] | | - | 0.18 | 0.24 |
| Dry weight | | | g | 6.71 | 6.62 |
| Volume | | | cm$^3$ | 18.1 | 21.1 |
| Dry density | | | g/cm$^3$ | 0.371 | 0.314 |
| 0.2% n-butane adsorption-desorption performance | First adsorption amount | | g | 0.74 | 0.74 |
| | Effective adsorption-desorption amount[2] | | g | 0.43 | 0.49 |
| | Effective adsorption-desorption amount ratio[3] | | wt% | 6.4 | 7.4 |
| | Effective adsorption-desorption ratio[4] | | % | 58 | 66 |
| | 0-ppm maintaining time[5] | | min | 25 | 53 |
| Pressure loss | | | kPa | 0.59 | 0.80 |
| 1) Standard deviation/mean value 2) Mean of second adsorption amount and second desorption amount<br>3) (Effective adsorption-desorption amount/weight of formed adsorber) x 100 (wt%)<br>4) (Effective adsorption-desorption amount/first adsorption amount) x 100 (%)<br>5) 0-ppm maintaining time in second adsorption | | | | | |

As indicated by Table 3-1, Table 3-2, and Table 3-3, the formed adsorbers including the activated carbon fiber and the granular activated carbon have excellent adsorption and desorptionperformance, and pressure loss in the obtained fromed adsorption is low.

**List of Reference Signs**

1      LAYERED ADSORBER
10     SHEET-SHAPED FORMED ADSORBER
10a    MAJOR SURFACE OF SHEET-SHAPED FORMED ADSORBER
10b    LATERAL END SURFACE OF SHEET-SHAPED FORMED ADSORBER
10c    LATERAL END SURFACE OF SHEET-SHAPED FORMED ADSORBER
F      FLOW DIRECTION OF GAS
2      DISK-SHAPED FORMED ADSORBER
3      CYLINDER-SHAPED FORMED ADSORBER

**Claims**

1.  A formed adsorber for a canister, the formed adsorber comprising:

    activated carbon fiber, granular activated carbon, and a binder, the formed adsorber being a formed product,

a weight ratio of 5 to 95 parts by weight of the activated carbon fiber to 95 to 5 parts by weight of the granular activated carbon, in a total weight of the activated carbon fiber and the granular activated carbon; and a weight ratio of 0.3 to 20 parts by weight of the binder in the formed adsorber to 100 parts by weight of the activated carbon fiber and the granular activated carbon that are contained in the formed adsorber.

2.  The formed adsorber according to claim 1, wherein pressure loss in the formed adsorber is less than pressure loss in a formed adsorber of a two-type mixture of the activated carbon fiber and the binder and less than pressure loss in a formed product of a two-type mixture of the granular activated carbon and the binder.

3.  The formed adsorber for a canister, according to claim 2, wherein the pressure loss in the formed adsorber is 0.52 kPa or less.

4.  The formed adsorber for a canister, according to claim 2, wherein the pressure loss in the formed adsorber is 0.45 kPa or less.

5.  The formed adsorber according to claim 1, wherein the granular activated carbon has a mean particle size ranging from 100 to 3000 um.

6.  The formed adsorber according to claim 1, wherein the activated carbon fiber has a mean fiber length ranging from 300 to 10000 $\mu\eta$.

7.  The formed adsorber according to claim 1, wherein the formed adsorber has a dry density ranging from 0.010 to 0.400 $g/cm^3$.

8.  The formed adsorber according to claim 1, wherein the formed adsorber has a specific surface area of 2500 $m^2/g$ or less.

9.  The formed adsorber according to claim 1, wherein the formed adsorber has a total pore volume ranging from 0.50 to 1.20 $cm^3$.

10.  The formed adsorber according to claim 1, wherein the binder is a fibrous binder.

11.  The formed adsorber according to claim 1, wherein

the granular activated carbon has a mean particle size ranging from 100 to 3000 um,
the activated carbon fiber has a mean fiber length ranging from 300 to 10000 um,
the formed adsorber has a dry density ranging from 0.010 to 0.400 $g/cm^3$,
the formed adsorber has a specific surface area of 2500 $m^2/g$ or less,
the formed adsorber has a total pore volume ranging from 0.50 to 1.20 $cm^3$, and
the binder is a fibrous binder.

12.  The formed adsorber according to claim 3, wherein

the granular activated carbon has a mean particle size ranging from 100 to 3000 $\mu m$,
the activated carbon fiber has a mean fiber length ranging from 300 to 10000 $\mu m$,
the formed adsorber has a dry density ranging from 0.010 to 0.400 $g/cm^3$,
the formed adsorber has a specific surface area of 2500 $m^2/g$ or less,
the formed adsorber has a total pore volume ranging from 0.50 to 1.20 $cm^3$, and
the binder is a fibrous binder.

13.  A canister comprising the formed adsorber according to any one of claims 1 to 12.

[Fig. 1]

[Fig. 2]

[Fig. 3]

## INTERNATIONAL SEARCH REPORT

| International application No. |
| --- |
| **PCT/JP2022/035091** |

---

**A.    CLASSIFICATION OF SUBJECT MATTER**

*F02M 25/08*(2006.01)i; *B01J 20/20*(2006.01)i; *C01B 32/354*(2017.01)i
FI:    F02M25/08 311D; B01J20/20 F; C01B32/354; B01J20/20 B

According to International Patent Classification (IPC) or to both national classification and IPC

**B.    FIELDS SEARCHED**

Minimum documentation searched (classification system followed by classification symbols)

F02M25/08; B01J20/20; C01B32/354; B01D53/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 5-103979 A (OSAKA GAS CO LTD) 27 April 1993 (1993-04-27) | 1-2, 5-8, 10, 13 |
|  | paragraphs [0012]-[0020], [0022], [0027] | |
| Y | | 3-4, 9, 11-12 |
| X | JP 7-269421 A (OSAKA GAS CO LTD) 17 October 1995 (1995-10-17) | 1-4, 6, 8, 10, 13 |
|  | paragraphs [0001], [0005]-[0007], [0021]-[0022], fig. 6-7 | |
| Y | | 3-4, 9, 12 |
| X | JP 7-251067 A (NIPPONDENSO CO LTD) 03 October 1995 (1995-10-03) | 1, 5, 7-8, 10, 13 |
|  | paragraphs [0001], [0006]-[0014], [0022]-[0025], fig. 1, 5-6 | |
| Y | | 3-4, 9, 12 |
| Y | JP 6568328 B1 (NIPPON PAPER INDUSTRIES CO., LTD.) 28 August 2019 (2019-08-28) | 9, 11-12 |
|  | paragraph [0013] | |
| A | WO 2015/099063 A1 (CALSONIC KANSEI CORP) 02 July 2015 (2015-07-02) | 1-13 |
|  | entire text, all drawings | |

☑ Further documents are listed in the continuation of Box C.      ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
| --- | --- |
| **21 November 2022** | **06 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

| International application No. |
| --- |
| **PCT/JP2022/035091** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2019-18154 A (FUTAMURA CHEMICAL CO LTD) 07 February 2019 (2019-02-07) entire text, all drawings | 1-13 |
| A | EP 2517787 A1 (ELECTROPHOR, INC.) 31 October 2012 (2012-10-31) all docs. and figs. | 1-13 |
| A | JP 2-160045 A (OSAKA GAS CO LTD) 20 June 1990 (1990-06-20) entire text, all drawings | 8 |

Form PCT/ISA/210 (second sheet) (January 2015)

INTERNATIONAL SEARCH REPORT
Information on patent family members

International application No.

**PCT/JP2022/035091**

| Patent document cited in search report | | | Publication date (day/month/year) | Patent family member(s) | | | Publication date (day/month/year) |
|---|---|---|---|---|---|---|---|
| JP | 5-103979 | A | 27 April 1993 | (Family: none) | | | |
| JP | 7-269421 | A | 17 October 1995 | (Family: none) | | | |
| JP | 7-251067 | A | 03 October 1995 | (Family: none) | | | |
| JP | 6568328 | B1 | 28 August 2019 | US | 2021/0198111 | A1 | |
| | | | | paragraphs [0029]-[0030] | | | |
| | | | | WO | 2019/244630 | A1 | |
| | | | | EP | 3812571 | A1 | |
| | | | | CN | 112154264 | A | |
| | | | | KR | 10-2021-0020138 | A | |
| WO | 2015/099063 | A1 | 02 July 2015 | (Family: none) | | | |
| JP | 2019-18154 | A | 07 February 2019 | (Family: none) | | | |
| EP | 2517787 | A1 | 31 October 2012 | US | 2012/0305474 | A1 | |
| | | | | WO | 2011/078745 | A1 | |
| | | | | CN | 102762295 | A | |
| JP | 2-160045 | A | 20 June 1990 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013173137 A
- JP 2019010880 A
- JP 6568328 B
- JP H10005580 A